# EUROPÄISCHE PATENTANMELDUNG

(11) **EP 3 336 120 A1**
(43) Veröffentlichungstag der Anmeldung: **20.06.2018**
(21) Anmeldenummer: 16204079.4
(22) Anmeldetag: 14.12.2016
(51) Int. Cl.: C08G 59/18, C09J 163/00, C04B 26/14

(54) **EPOXIDHARZ-KLEBSTOFF MIT HOHER DRUCKFESTIGKEIT**

(71) Anmelder: Sika Technology AG, 6340 Baar (CH)
(72) Erfinder: Gerber, Ulrich, 8142 Uitikon-Waldegg (CH); Kelch, Steffen, Oberengstringen (CH); Mayer, Christoph, 8835 Feusisberg (CH)
(74) Vertreter: Sika Patent Attorneys

(57) **Zusammenfassung**

Die vorliegende Erfindung betrifft einen Epoxidharz-Klebstoff umfassend mindestens ein Epoxidharz in der Harz-Komponente, mindestens ein bei Raumtemperatur fliessfähiges, primäre Aminogruppen aufweisendes Addukt **AD** aus (i) mindestens einem Polyepoxid und (ii) mindestens einem Amin der Formel (I) und gegebenenfalls weiteren Aminen, und zusätzlich mindestens einen Beschleuniger **B** mit mindestens einer Dimethylaminogruppe in der Härter-Komponente, und insgesamt mindestens 50 Gewichts-% von mindestens einem anorganischen Füllstoff.

Der Epoxidharz-Klebstoff ist geruchsarm und gut verarbeitbar, baut bei Raumtemperatur und in der Kälte schnell Festigkeit auf und verfügt nach der Aushärtung über hohe Festigkeiten, insbesondere besonders hohe Druckfestigkeiten, sowie hohe Haftkräfte zu Substraten wie Stahl, Kohlefaser-Verbundwerkstoffen (CFK) und Beton.

## Beschreibung

### Technisches Gebiet

Die Erfindung betrifft das Gebiet der kalthärtenden Epoxidharz-Klebstoffe.

### Stand der Technik

Bei Raumtemperatur härtbare Epoxidharz-Klebstoffe werden für viele Anwendungen eingesetzt. Sie verfügen typischerweise über hohe Beständigkeiten, hohe Festigkeiten und eine starke Haftung zu unterschiedlichen Substraten. Für Anwendungen in der Bauindustrie müssen sie unter Baustellenbedingungen einsetzbar sein; dafür sind insbesondere eine einfache Verarbeitbarkeit mit nicht zu hoher Viskosität sowie eine zuverlässige und schnelle Aushärtung bei Umgebungstemperaturen im Freien, insbesondere auch in der Kälte und bei hoher Feuchtigkeit oder Nässe, wichtig. Epoxidharz-Klebstoffe mit einem hohen Gehalt an anorganischen Füllstoffen, insbesondere Quarzmehl und/oder Quarzsand, werden auch als Klebemörtel bezeichnet. Für gewisse Anwendungen sollen solche Klebstoffe nach der Aushärtung eine hohe Druckfestigkeit aufweisen. Insbesondere Klebstoffe für das Aufeinanderkleben von Betonelementen zu hohen vertikalen Konstruktionen, beispielsweise Stützen oder Pfeiler von Hochhäusern, Brücken oder Türme von Windkraftanlagen, müssen eine hohe Druckfestigkeit aufweisen, da die unteren Klebefugen dem hohen Gewicht der darüberliegenden Betonelemente ausgesetzt sind. Heutzutage erfordern energieeffiziente Windkraftanlagen immer höhere Bauten. Dabei werden Elemente aus hochfestem Beton eingesetzt, wodurch ein Bedarf nach Klebstoffen mit entsprechend sehr hoher Druckfestigkeit besteht.
US 6,068,885 beschreibt eine niedrigviskose, selbstverlaufende Epoxidharz-Zusammensetzung zum Reparieren von Rissen in Beton, welche in den Beispielen eine maximale Druckfestigkeit von 15'850 psi (ca. 109 MPa) erreicht.

### Darstellung der Erfindung

Aufgabe der Erfindung ist es, einen Epoxidharz-Klebstoff zur Verfügung zu stellen, welcher unter Baustellenbedingungen einsetzbar ist, eine besonders hohe Druckfestigkeit aufweist und geeignet ist für die Verwendung als Klebemörtel.
Überraschenderweise kann diese Aufgabe mit einem Klebstoff wie in Anspruch 1 beschrieben gelöst werden. Der Klebstoff umfasst anorganische Füllstoffe und in der Härter-Komponente mindestens ein Addukt aus (i) mindestens einem Polyepoxid und (ii) mindestens einem Amin der Formel (I), und mindestens einen Beschleuniger **B,** welcher mindestens eine Dimethylaminogruppe aufweist. Die Härter-Komponente ist einfach herstellbar, geruchsarm und niedrigviskos.
Der erfindungsgemässe Epoxidharz-Klebstoff ist geruchsarm, einfach herstellbar, auch ohne Verdünner gut verarbeitbar und emissionsarm. Er baut bei Raumtemperatur und in der Kälte sehr schnell Festigkeit auf und verfügt nach der Aushärtung über hohe Festigkeiten, eine hohe Glasübergangstemperatur und hohe Haftkräfte zu Substraten wie Beton, Stahl oder Kohlefaser-Verbundwerkstoffen. Überraschenderweise weist er dabei eine sehr hohe Druckfestigkeit auf, die deutlich über den für ähnliche Epoxidharz-Klebstoffe üblichen Werten liegt.
Der erfindungsgemässe Epoxidharz-Klebstoff ist auch unter kalten und feuchten Bedingungen einsetzbar, wobei er zuverlässig aushärtet und auch auf feuchten Substraten, insbesondere feuchtem Beton, eine gute Haftung aufbaut. Er ist besonders geeignet als Klebemörtel für Turm- oder Rohr-Konstruktionen aus aufeinander oder aneinander geklebten Betonelementen, wie sie beim Bau von Windkraftanlagen, Schachtanlagen, Pipelines oder Tunnelröhren vorkommen.
Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist ein Epoxidharz-Klebstoff umfassend
- eine Harz-Komponente enthaltend mindestens ein Epoxidharz,
- eine Härter-Komponente enthaltend
   (a) mindestens ein Addukt **AD** erhalten aus der Umsetzung von (i) mindestens einem Polyepoxid mit (ii) mindestens einem Amin der Formel (I) und gegebenenfalls weiteren Aminen, 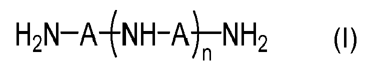 wobei
      n für eine ganze Zahl von 1 bis 10 steht, und
      A jeweils für einen zweiwertigen Kohlenwasserstoffrest mit 2 bis 8 C-Atomen steht, wobei alle Stickstoffatome jeweils durch eine Kette von mindestens zwei C-Atomen voneinander getrennt sind, und
   (b) mindestens ein Beschleuniger **B,** welcher mindestens eine Dimethylaminogruppe aufweist,
   wobei der Epoxidharz-Klebstoff insgesamt mindestens 50 Gewichts-% anorganische Füllstoffe umfasst.

Mit "Poly" beginnende Substanznamen wie Polyamin, Polyol oder Polyepoxid bezeichnen Substanzen, die formal zwei oder mehr der in ihrem Namen vorkommenden funktionellen Gruppen pro Molekül enthalten.
Als "primäre Aminogruppe" wird eine Aminogruppe bezeichnet, die an einen einzigen organischen Rest gebunden ist und zwei Wasserstoffatome trägt; als "sekundäre Aminogruppe" wird eine Aminogruppe bezeichnet, die an zwei organische Reste, welche auch gemeinsam Teil eines Rings sein können, gebunden ist und ein Wasserstoffatom trägt; und als "tertiäre Aminogruppe" wird eine Aminogruppe bezeichnet, die an drei organische Reste, welche auch zu zweit oder zu dritt Teil eines oder mehrerer Ringe sein können, gebunden ist und kein Wasserstoffatom trägt.
Als "Aminwasserstoff" werden die Wasserstoffatome von primären und sekundären Aminogruppen bezeichnet.
Als "Aminwasserstoff-Equivalentgewicht" wird die Masse eines Amins oder einer Amin-haltigen Zusammensetzung, die ein Molequivalent Aminwasserstoff enthält, bezeichnet.

Als "Verdünner" wird eine in einem Epoxidharz lösliche und dessen Viskosität senkende Substanz bezeichnet, welche bei der Aushärtung des Epoxidharzes nicht kovalent in die Harzmatrix eingebaut wird.
Als "Viskosität" wird die dynamische Viskosität oder Scherviskosität bezeichnet, welche durch das Verhältnis zwischen der Schubspannung und der Scherrate (Geschwindigkeitsgefälle) definiert ist und wie in den Ausführungsbeispielen beschrieben bestimmt wird.
Als "Molekulargewicht" wird die molare Masse (in Gramm pro Mol) eines Moleküls bezeichnet. Als "mittleres Molekulargewicht" wird das Zahlenmittel Mₙ einer polydispersen Mischung von oligomeren oder polymeren Molekülen bezeichnet, welches üblicherweise mittels Gelpermeationschromatographie (GPC) gegen Polystyrol als Standard bestimmt wird.
Als "Raumtemperatur" wird eine Temperatur von 23 °C bezeichnet.

Bevorzugt handelt es sich beim erfindungsgemässen Epoxidharz-Klebstoff nicht um ein wässriges System. Mit einem nicht-wässrigen Epoxidharz-Klebstoff werden wesentlich höhere Aushärtungsgeschwindigkeiten, Festigkeiten, Druckfestigkeiten und bessere Haftungseigenschaften erreicht.
Bevorzugt enthält der erfindungsgemässe Epoxidharz-Klebstoff höchstens 5 Gewichts-%, besonders bevorzugt höchstens 2 Gewichts-%, insbesondere höchstens 1 Gewichts-%, Wasser.

Bevorzugt enthalten sowohl die Harz-Komponente als auch die Härter-Komponente mindestens einen anorganischen Füllstoff. Ein solcher Klebstoff ist besonders geeignet für die Verwendung als Klebemörtel.

Ein für die Umsetzung zum Addukt **AD** geeignetes Polyepoxid ist insbesondere ein Glycidylether mit einer mittleren Funktionalität bezogen auf die Glycidoxygruppen im Bereich von 1.8 bis 4, insbesondere im Bereich von 2 bis 4. Geeignet sind insbesondere technische, kommerziell verfügbare Epoxidharze.

Das Polyepoxid ist bevorzugt ein einkerniger oder mehrkerniger aromatischer Glycidylether mit einer mittleren Funktionalität im Bereich von 2 bis 4.

Insbesondere ist das Polyepoxid ein technisches Epoxidharz, insbesondere ein Glycidylisierungsprodukt von:
- Bisphenol-A, Bisphenol-F oder Bisphenol-A/F, wobei A für Aceton und F für Formaldehyd steht, welche als Edukte zur Herstellung dieser Bisphenole dienten. Im Fall von Bisphenol-F können auch Stellungsisomere vorhanden sein, insbesondere abgeleitet von 2,4'- oder 2,2'-Hydroxyphenylmethan.
- Dihydroxybenzol-Derivaten wie Resorcin, Hydrochinon oder Brenzkatechin;
- weiteren Bisphenolen wie Bis(4-hydroxy-3-methylphenyl)methan, 2,2-Bis(4-hydroxy-3-methylphenyl)propan (Bisphenol-C), Bis(3,5-dimethyl-4-hydroxyphenyl)methan, 2,2-Bis(3,5-dimethyl-4-hydroxyphenyl)propan, 2,2-Bis(4-hydroxy-3-tert.butylphenyl)propan, 2,2-Bis(4-hydroxyphenyl)butan (Bisphenol-B), 3,3-Bis(4-hydroxyphenyl)pentan, 3,4-Bis(4-hydroxyphenyl)hexan, 4,4-Bis(4-hydroxyphenyl)heptan, 2,4-Bis(4-hydroxyphenyl)-2-methylbutan, 2,4-Bis(3,5-dimethyl-4-hydroxyphenyl)-2-methylbutan, 1,1-Bis(4-hydroxyphenyl)-cyclohexan (Bisphenol-Z), 1,1-Bis(4-hydroxyphenyl)-3,3,5-trimethylcyclohexan (Bisphenol-TMC), 1,1-Bis(4-hydroxyphenyl)-1-phenylethan, 1,4-Bis[2-(4-hydroxyphenyl)-2-propyl]benzol (Bisphenol-P), 1,3-Bis[2-(4-hydroxyphenyl)-2-propyl]benzol (Bisphenol-M), 4,4'-Dihydroxybiphenyl (DOD), Bis(2-hydroxynaphth-1-yl)methan, Bis(4-hydroxynaphth-1-yl)methan oder 1,5-Dihydroxynaphthalin; oder
- Novolaken, welche insbesondere Kondensationsprodukte von Phenol oder Kresolen mit Formaldehyd bzw. Paraformaldehyd oder Acetaldehyd oder Crotonaldehyd oder Isobutyraldehyd oder 2-Ethylhexanal oder Benzaldehyd oder Furfural sind.

Davon bevorzugt sind Bisphenol-A-Diglycidylether, Bisphenol-F-Diglycidylether, Bisphenol-A/F-Diglycidylether, Resorcinol-Diglycidylether oder Hydrochinon-Diglycidylether, oder Novolak-Glycidylether, insbesondere kommerziell erhältliche technische Qualitäten davon.
Solche Polyepoxide ermöglichen hohe Festigkeiten, insbesondere auch hohe Druckfestigkeiten, und gute Haftungseigenschaften.

Besonders bevorzugt sind Bisphenol-A-Diglycidylether, Bisphenol-F-Diglycidylether oder Bisphenol-A/F-Diglycidylether, insbesondere Araldite^{®} GY 240, Araldite^{®} GY 250, Araldite^{®} GY 281, Araldite^{®} GY 282, Araldite^{®} GY 285, Araldite^{®} PY 304 oder Araldite^{®} PY 720 (alle von Huntsman), oder D.E.R.^{®} 330, D.E.R. ^{®} 331, D.E.R.^{®} 332, D.E.R.^{®} 336, D.E.R.^{®} 351, D.E.R.^{®} 352, D.E.R.^{®} 354 oder D.E.R.^{®} 356 (alle von Olin), oder Novolak-Glycidylether.

Ganz besonders bevorzugt ist das Polyepoxid ein Novolak-Glycidylether mit einer mittleren Funktionalität im Bereich von 2.5 bis 3.9. Damit werden eine besonders schnelle Aushärtung, insbesondere auch bei Temperaturen unterhalb von 10 °C, hohe Druckfestigkeiten und hohe Glasübergangstemperaturen erreicht.
Ein geeigneter Novolak-Glycidylether ist abgeleitet von Novolaken, welche Kondensationsprodukte von Phenol oder Kresolen mit Formaldehyd bzw. Paraformaldehyd oder Acetaldehyd oder Crotonaldehyd oder Isobutyraldehyd oder 2-Ethylhexanal oder Benzaldehyd oder Furfural sind. Ein solcher Novolak-Glycidylether ist typischerweise bei Raumtemperatur flüssig, oder sehr hochviskos bis hin zu kaum fliessfähig, oder fest.

Bevorzugt ist ein Novolak-Glycidylether, welcher abgeleitet ist von Phenol-Formaldehyd-Novolaken, welche auch als Epoxy-Phenol-Novolak-Harze bezeichnet werden.
Solche Novolak-Glycidylether sind kommerziell erhältlich, beispielsweise von Olin, Huntsman, Momentive oder Emerald Performance Materials. Bevorzugte Typen sind D.E.N.^{®} 431, D.E.N.^{®} 438 oder D.E.N.^{®} 439 (von Olin), Araldite^{®} EPN 1179, Araldite^{®} EPN 1180, Araldite^{®} EPN 1182 oder Araldite^{®} EPN 1183 (von Huntsman), Epon^{®} 154, Epon^{®} 160 oder Epon^{®} 161 (von Momentive) oder Epalloy^{®} 8250, Epalloy^{®} 8330 oder Epalloy^{®} 8350 (von Emerald Performance Materials).

Für die Umsetzung zum Addukt **AD** wird mindestens ein Amin der Formel (I) und gegebenenfalls weitere Amine eingesetzt.
Bevorzugt steht n für eine ganze Zahl von 1 bis 7, insbesondere 1 bis 6.

Bevorzugt weist A 2 bis 6 C-Atome auf.
Bevorzugt steht A für 1,2-Ethylen, 1,3-Propylen, 1,4-Butylen, 1,3-Pentylen, 2-Methyl-1,5-pentylen oder 1,6-Hexylen.
Besonders bevorzugt ist A ausgewählt aus der Gruppe bestehend aus 1,2-Ethylen, 1,3-Propylen und 1,6-Hexylen.
Für den Fall, dass A für 1,6-Hexylen steht, steht n bevorzugt für 1.

Bevorzugt als Amin der Formel (I) ist Diethylentriamin (DETA), Triethylentetramin (TETA), Tetraethylenpentamin (TEPA), Pentaethylenhexamin (PEHA), Hexaethylenheptamin (HEHA), Heptaethylenoctamin (HEOA), Dipropylentriamin (DPTA), N-(2-Aminoethyl)-1,3-propandiamin (N3-Amin), N,N'-Bis(3-aminopropyl)ethylendiamin (N4-Amin), Bis(6-aminohexyl)amin (=Bis(hexamethylen)triamin oder BHMT), N,N'-Bis(3-aminopropyl)-1,4-diaminobutan, N5-(3-Aminopropyl)-2-methyl-1,5-pentandiamin, N3-(3-Aminopentyl)-1,3-pentandiamin, N5-(3-Amino-1-ethylpropyl)-2-methyl-1,5-pentandiamin oder N,N'-Bis(3-amino-1-ethylpropyl)-2-methyl-1,5-pentandiamin.

Besonders bevorzugt ist das Amin der Formel (I) ausgewählt aus der Gruppe bestehend aus TETA, TEPA, PEHA, HEHA, N4-Amin und BHMT. Diese Amine ermöglichen besonders hohe Festigkeiten, insbesondere besonders hohe Druckfestigkeiten.
Davon bevorzugt ist TETA, TEPA, PEHA und/oder HEHA. Damit werden besonders hohe Glasübergangstemperaturen erreicht, wobei TETA den Vorteil aufweist, dass niedrigviskose Addukte **AD** zugänglich sind, welche einen besonders hohen Gehalt an Struktureinheiten, welche vom Polyepoxid herrühren, enthalten, was in Bezug auf eine schnelle Aushärtung, insbesondere auch bei Temperaturen unterhalb von 10 °C, vorteilhaft ist, während TEPA, PEHA und/oder HEHA besonders geruchsarme Klebstoffe ermöglichen.
Davon weiterhin bevorzugt ist N4-Amin. Damit werden besonders hohe Druckfestigkeiten erreicht.
Davon weiterhin bevorzugt ist BHMT. BHMT ermöglicht Klebstoffe, welche besonders dehnbar und besonders wenig anfälltig auf Aushärtungsstörungen in der Kälte sind, und Härter-Komponenten mit einem relativ hohen Aminwasserstoff-Equivalentgewicht, was für das Formulieren von Klebemörteln mit hohem Füllstoffgehalt vorteilhaft ist.

Das Amin der Formel (I) wird gegebenenfalls zusammen mit weiteren Aminen eingesetzt. Dabei beträgt der Gehalt an Amin der Formel (I) bevorzugt mindestens 50 Gewichts-%, besonders bevorzugt mindestens 60 Gewichts-%, bezogen auf die Summe der eingesetzen Amine.

Bevorzugt wird das Amin der Formel (I) in einer technischen Qualität eingesetzt. Dabei handelt es sich typischerweise um eine Mischung von Aminen, welche neben Aminen der Formel (I) zusätzlich ein oder mehrere weitere Amine, welche nicht der Formel (I) entsprechen, enthält. Eine solche technische Qualität resultiert typischerweise aus dem Herstellprozess des Amins der Formel (I), wobei der Gehalt an Amin der Formel (I) je nach Herstellungsart und Reinigungsprozess unterschiedlich sein kann.

Bevorzugt wird das Amin der Formel (I) zusammen mit mindestens einem weiteren Amin, welches nicht der Formel (I) entspricht und ein Bestandteil einer technischen Qualität des Amins der Formel (I) ist, verwendet, wobei der Gehalt an Amin der Formel (I) in einer solchen technischen Qualität bevorzugt mindestens 50 Gewichts-%, besonders bevorzugt mindestens 60 Gewichts-%, beträgt.
Dabei kann das Amin der Formel (I) auch als Mischung enthaltend mehrere verschiedene Amine der Formel (I) vorliegen. Insbesondere im Fall von A = 1,2-Ethylen kann das Amin der Formel (I) aus einer Mischung aus mehreren Aminen mit verschiedenen Werten von n vorliegen.
Insbesondere kann auch eine Mischung von Aminen der Formel (I) mit verschiedenen Bedeutungen von A und n verwendet werden, insbesondere eine Mischung aus BHMT und TETA und/oder TEPA.

Die Verwendung einer technischen Qualität des Amins der Formel (I) für die Herstellung des Addukts **AD** ermöglicht kostengünstige Epoxidharz-Klebstoffe mit besonders hohen Druckfestigkeiten.

Im Fall von TETA als Amin der Formel (I) enthält eine technische Qualität typischerweise N,N,N-Tris(2-aminoethyl)amin, N,N'-Bis(2-aminoethyl)piperazin und/oder N-(5-Amino-3-azapentyl)piperazin.
Im Fall von TEPA als Amin der Formel (I) enthält eine technische Qualität typischerweise N,N-Bis(2-aminoethyl)-N-(5-amino-3-azapentyl)amin, N-(2-Aminoethyl)-N'-(5-amino-3-azapentyl)piperazin und/oder N-(8-Amino-3,6-diazaoctyl)piperazin.
Im Fall von BHMT als Amin der Formel (I) enthält eine technische Qualität typischerweise höhere Oligomere von BHMT, 1,6-Hexamethylendiamin, 6-Aminocapronitril und/oder 6-Aminocaproamid.
Als "höhere Oligomere von 1,6-Hexamethylendiamin" werden dabei Oligomere mit drei oder mehr 1,6-Hexamethylendiamin-Einheiten bezeichnet.

Bevorzugt sind bei der Umsetzung zum Addukt **AD** neben
- Aminen der Formel (I) und
- in einer technischen Qualität der eingesetzten Amine der Formel (I) enthaltene weitere Amine,
   keine weiteren Amine vorhanden.

Das Addukt **AD** wird insbesondere erhalten aus der Umsetzung des Polyepoxids mit einem stöchiometrischen Überschuss an Amin der Formel (I) und gegebenenfalls weiteren Aminen.

Insbesondere liegen die primären Aminogruppen des Amins der Formel (I) und gegebenenfalls vorhandenen weiteren Aminen gegenüber den Epoxidgruppen des Polyepoxids bei der Umsetzung zum Addukt im stöchiometirschen Überschuss vor.
Bei der Umsetzung zum Addukt beträgt das Verhältnis zwischen der Anzahl vorhandener primärer Aminogruppen und der Anzahl vorhandener Epoxidgruppen bevorzugt mindestens 3, insbesondere mindestens 4.
Bevorzugt liegt das Verhältnis zwischen der Anzahl vorhandener primärer Aminogruppen und der Anzahl vorhandener Epoxidgruppen bei der Umsetzung zum Addukt im Bereich von 3 bis 12, besonders bevorzugt 4 bis 8, insbesondere 4 bis 6. Auf diese Weise wird ein bei Raumtemperatur fliessfähiges Addukt mit gut handhabbarer Viskosität erhalten, welches primäre und sekundäre Aminogruppen und einen hohen Gehalt an Struktureinheiten, welche vom Polyepoxid herrühren, aufweist.
Nach der Herstellung kann nicht umgesetztes Amin teilweise entfernt werden, insbesondere mittels Destillation. Bevorzugt wird nicht umgesetztes Amin nicht aus dem Addukt entfernt.

Bevorzugt hat das Addukt **AD** eine Viskosität bei 25 °C von kleiner als 100 Pa·s, besonders bevorzugt kleiner als 50 Pa·s, insbesondere kleiner als 30 Pa·s.

Bevorzugt liegt die Temperatur bei der Umsetzung zum Addukt im Bereich von 40 bis 140 °C, insbesondere 50 bis 120 °C. Dabei wird die Temperatur geeigneterweise so lange im genannten Bereich gehalten, bis die Epoxidgruppen grösstenteils umgesetzt sind.
Die Umsetzung kann gegebenenfalls in Anwesenheit eines Verdünners erfolgen, wobei als Verdünner auch sogenannte Lösemittel bezeichnet werden. Bevorzugt erfolgt die Umsetzung ohne die Verwendung eines Verdünners. Dadurch sind auf einfache Weise Härter-Komponenten zugänglich, welche frei von Verdünnern sind.

Das erhaltene Addukt **AD** ist typischerweise ein Gemisch enthaltend
- einfache Addukte, bei welchen jede Struktureinheit abgeleitet von Aminen der Formel (I) und gegebenenfalls weiteren Aminen jeweils nur einfach alkyliert bzw. adduktiert vorliegt,
- höhere Addukte, bei welchen mindestens eine Struktureinheit abgeleitet von Aminen der Formel (I) und gegebenenfalls weiteren Aminen mindestens doppelt alkyliert bzw. adduktiert vorliegt, und
- freies Amin der Formel (I) und gegebenenfalls weitere freie Amine.

Ein typisches einfaches Addukt mit einer Struktureinheit abgeleitet von einem Polyepoxid mit x Glycidoxygruppen und Struktureinheiten abgeleitet von Aminen der Formel (I) weist die folgende Formel auf, 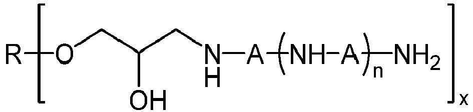 wobei
x für eine ganze Zahl von 2 bis 4 steht,
R für den Rest eines Polyepoxids nach Entfernung von x Glycidoxygruppen steht,
und n und A die bereits genannten Bedeutungen aufweisen.

Die Härter-Komponente umfasst zusätzlich mindestens einen Beschleuniger B, welcher mindestens eine Dimethylaminogruppe aufweist.
Als Beschleuniger **B** geeignet sind insbesondere Benzyldimethylamin, α-Methylbenzyldimethylamin, N,N-Diethyl-N',N'-dimethyl-1,3-propandiamin, N,N-Dimethylethanolamin, 3-(N,N-Dimethylamino)propan-1-ol, 2- oder 4-(Dimethylaminomethyl)phenol, 2,4- oder 2,6-Bis(N,N-dimethylaminomethyl)phenol, 2,4,6-Tris(N, N-dimethylaminomethyl)phenol, 2,4,6-Tris(N,N-dimethyl-4-amino-2-azabutyl)phenol oder die im Folgenden beschriebenen Beschleuniger der Formel (II).

Besonders bevorzugt Beschleuniger **B** ist ein Beschleuniger **B** der Formel (II), 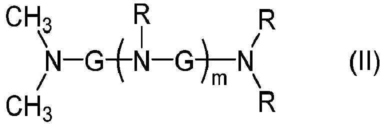 wobei
m für 0 oder 1 oder 2 oder 3 oder 4 steht,
G jeweils für einen zweiwertigen Kohlenwasserstoffrest mit 2 bis 8 C-Atomen steht, wobei alle Stickstoffatome jeweils durch eine Kette von mindestens zwei C-Atomen voneinander getrennt sind, und
R jeweils für einen Wasserstoff-Rest oder für einen Methyl-Rest steht.

Ein Beschleuniger **B** der Formel (II) ermöglicht Epoxidharz-Klebstoffe mit guter Verarbeitbarkeit, welche besonders unempfindlich sind für Aushärtungsstörungen in der Kälte.

Bevorzugt steht m für 0 oder 1 oder 2, insbesondere für 1. Ein solcher Beschleuniger ermöglicht gut verarbeitbare Epoxidharz-Klebstoffe mit besonders wenig Geruch.
Bevorzugt weist G 2 bis 6 C-Atome auf.
Bevorzugt steht G für 1,2-Ethylen, 1,3-Propylen, 1,4-Butylen, 1,3-Pentylen, 2-Methyl-1,5-pentylen oder 1,6-Hexylen.
Besonders bevorzugt steht G für 1,2-Ethylen, 1,3-Propylen oder 1,6-Hexylen, insbesondere für 1,3-Propylen.
Bevorzugt steht mindestens ein Rest R für einen Wasserstoff-Rest. Ein solcher Beschleuniger wird bei der Aushärtung ins Polymer-Netzwerk eingebaut, was ein Migrieren aus dem ausgehärteten Klebstoff verhindert und somit aus ökologischer und toxikologischer Hinsicht vorteilhaft ist.
Besonders bevorzugt stehen alle Reste R für einen Wasserstoff-Rest. Ein solcher Beschleuniger ermöglicht besonders gut verarbeitbare Epoxidharz-Klebstoffe mit hoher Dehnbarkeit.

Am meisten bevorzugt steht m für 1, G für 1,3-Propylen und alle R jeweils für einen Wasserstoff-Rest. Dieser Beschleuniger wird bei der Aushärtung schnell und vollständig ins ausgehärtete Epoxidharz-Polymer eingebaut und ermöglicht sehr geruchsarme Klebstoffe mit besonders guter Verarbeitbarkeit, sehr hoher Druckfestigkeit, kaum Aushärtungsstörungen in der Kälte und sehr hoher Haftzugfestigkeit zwischen Beton und Stahl.

Geeignete Beschleuniger **B** der Formel (II) sind insbesondere N,N,N',N'-Tetramethyl-1,2-ethandiamin, N,N,N',N'-Tetramethyl-1,3-propandiamin, N,N,N',N'-Tetramethyl-1,4-butandiamin, N,N,N',N'-Tetramethyl-1,6-hexandiamin, N,N,N',N',N"-Pentamethyldiethylentriamin, N,N,N',N',N"-Pentamethyldipropylentriamin, N,N,N',N',N"-Pentamethyl-N-(2-aminoethyl)-1,3-propandiamin, N,N-Dimethyl-1,2-ethandiamin, N,N-Dimethyl-1,3-propandiamin, N,N-Dimethyl-1,4-butandiamin, N,N-Dimethyl-1,6-hexandiamin, 2-(2-(Dimethylamino)ethylamino)ethylamin, 2-(3-(Dimethylamino)propylamino)ethylamin, 3-(2-(Dimethylamino)ethylamino)propylamin, 3-(3-(Dimethylamino)propylamino)propylamin (DMAPAPA), Bis(2-(N,N-dimethylamino)ethyl)amin oder Bis(3-(N,N-dimethylamino)propyl)amin.
Besonders bevorzugt ist N,N,N',N',N"-Pentamethyldiethylentriamin, 3-(3-(Dimethylamino)propylamino)propylamin (DMAPAPA) oder Bis(3-(N,N-dimethylamino)propyl)amin. Diese Beschleuniger sind einfach verfügbar, geruchsarm und ermöglichen hohe Druckfestigkeiten, hohe Haftkräfte und kaum Aushärtungsstörungen in der Kälte.

Am meisten bevorzugt als Beschleuniger **B ist** 3-(3-(Dimethylamino)propylamino)propylamin (DMAPAPA). DMAPAPA ist geruchsarm, toxikologisch unbedenklich, kommerziell einfach verfügbar und verdünnt das Addukt **AD** besonders effizient. Es wird bei der Aushärtung schnell und vollständig ins ausgehärtete Epoxidharz-Polymer eingebaut und ermöglicht sehr geruchsarme Klebstoffe mit besonders guter Verarbeitbarkeit, sehr hoher Druckfestigkeit, kaum Aushärtungsstörungen in der Kälte und sehr hoher Haftzugfestigkeit zwischen Beton und Stahl.

Bevorzugt ist der Beschleuniger **B** bei der Herstellung des Adduktes **AD** nicht zugegen.

Die Härter-Komponente kann zusätzlich zum Addukt **AD** und zum Beschleuniger **B** weitere Polyamine enthalten. Als weiteres Polyamin geeignet sind Polyamine, welche im Mittel mindestens zwei, insbesondere mindestens drei, gegenüber Epoxidgruppen reaktive Aminwasserstoffe pro Molekül aufweisen, insbesondere die folgenden Amine:
- aliphatische, cycloaliphatische oder arylaliphatische primäre Diamine, insbesondere 1,3-Pentandiamin (DAMP), 1,5-Pentandiamin, 1,5-Diamino-2-methylpentan (MPMD), 2-Butyl-2-ethyl-1,5-pentandiamin (C11-Neodiamin), 1,6-Hexandiamin, 2,5-Dimethyl-1,6-hexandiamin, 2,2(4),4-Trimethylhexamethylendiamin (TMD), 1,7-Heptandiamin, 1,8-Octandiamin, 1,9-Nonandiamin, 1,10-Decandiamin, 1,11-Undecandiamin, 1,12-Dodecandiamin, DETA, TETA, TEPA, PEHA, HEHA, DPTA, N3-Amin, N4-Amin, N,N'-Bis(3-aminopropyl)-1,4-diaminobutan, N5-(3-Aminopropyl)-2-methyl-1,5-pentandiamin, N3-(3-Aminopentyl)-1,3-pentandiamin, N5-(3-Amino-1-ethylpropyl)-2-methyl-1,5-pentandiamin oder N,N'-Bis(3-amino-1-ethylpropyl)-2-methyl-1,5-pentandiamin, Bis(6-aminohexyl)amin (BHMT), 1,2-, 1,3- oder 1,4-Diaminocyclohexan, Bis(4-aminocyclohexyl)methan (H₁₂-MDA), Bis(4-amino-3-methylcyclohexyl)methan, Bis(4-amino-3-ethylcyclohexyl)methan, Bis(4-amino-3,5-dimethylcyclohexyl)methan, Bis(4-amino-3-ethyl-5-methylcyclohexyl)methan, 1-Amino-3-aminomethyl-3,5,5-trimethylcyclohexan (Isophorondiamin oder IPDA), 2- oder 4-Methyl-1,3-diaminocyclohexan oder Mischungen davon, 1,3-Bis(aminomethyl)cyclohexan, 1,4-Bis(aminomethyl)cyclohexan, 2,5(2,6)-Bis(aminomethyl)bicyclo[2.2.1]heptan (NBDA), 3(4),8(9)-Bis(aminomethyl)-tricyclo[5.2.1.0²,⁶]decan, 1,4-Diamino-2,2,6-trimethylcyclohexan (TMCDA), 1,8-Menthandiamin, 3,9-Bis(3-aminopropyl)-2,4,8,10-tetraoxaspiro[5.5]undecan, 1,3-Bis(aminomethyl)benzol (MXDA), 1,4-Bis(aminomethyl)benzol, 2,5-Bis(aminomethyl)furan oder 2,5-Bis(aminomethyl)tetrahydrofuran;
- aliphatische, cycloaliphatische oder arylaliphatische primäre Triamine, insbesondere 4-Aminomethyl-1,8-octandiamin, 1,3,5-Tris(aminomethyl)benzol, 1,3,5-Tris(aminomethyl)cyclohexan, Tris(2-aminoethyl)amin, Tris(2-aminopropyl)amin, Tris(3-aminopropyl)amin oder N,N-Bis(2-aminoethyl)-N-(5-amino-3-azapentyl)amin;
- Ethergruppen-haltige aliphatische primäre Di- oder Triamine, insbesondere Bis(2-aminoethyl)ether, 3,6-Dioxaoctan-1,8-diamin, 4,7-Dioxadecan-1,10-diamin, 4,7-Dioxadecan-2,9-diamin, 4,9-Dioxadodecan-1,12-diamin, 5,8-Dioxadodecan-3,10-diamin, 4,7,10-Trioxatridecan-1,13-diamin oder höhere Oligomere dieser Diamine, Bis(3-aminopropyl)polytetrahydrofurane oder andere Polytetrahydrofurandiamine, cycloaliphatische Ethergruppen-haltige Diamine aus der Propoxylierung und nachfolgenden Aminierung von 1,4-Dimethylolcyclohexan, erhältlich insbesondere als Jeffamine^{®} RFD-270 (von Huntsman), oder Polyoxyalkylendi- oder -triamine, welche typischerweise Produkte aus der Aminierung von Polyoxyalkylendi- oder -triolen darstellen und beispielsweise erhältlich sind unter dem Handelsnamen Jeffamine^{®} (von Huntsman), unter dem Handelsnamen Polyetheramine (von BASF) oder unter dem Handelsnamen PC Amine^{®} (von Nitroil). Insbesondere geeignete Polyoxyalkylendi- oder -triamine sind Jeffamine^{®} D-230, Jeff-amine^{®} D-400, Jeffamine^{®} D-205, Jeffamine^{®} EDR-104, Jeffamine^{®} EDR-148, Jeffamine^{®} EDR-176, Jeffamine^{®} T-403, oder entsprechende Amine von BASF oder Nitroil;
- Polyamine mit ein oder zwei sekundären Aminogruppen, insbesondere Produkte aus der reduktiven Alkylierung von primären aliphatischen Polyaminen mit Aldehyden oder Ketonen, insbesondere N-Benzyl-1,3-bis(aminomethyl)-benzol, N,N'-Dibenzyl-1,3-bis(aminomethyl)benzol, N-Benzyl-1,2-propandiamin, N-Benzyl-1,2-ethandiamin, oder partiell styrolisierte Polyamine wie zum Beispiel styrolisiertes MXDA (erhältlich als Gaskamine^{®} 240 von Mitsubishi Gas Chemical);
- tertiäre Aminogruppen aufweisende Polyamine mit primären aliphatischen Aminogruppen, welche frei sind von Dimethylaminogruppen, wie insbesondere N,N-Diethyldi(1,3-propylen)triamin (DEAPA), N,N-Diethyldi(1,2-ethylen)triamin, 1-(N,N-Diethylamino)-4-aminopentan, N-Aminoethylpiperazin, N-Aminopropylpiperazin, N,N'-Bis(aminopropyl)piperazin, N,N-Bis(3-aminopropyl)methylamin, N,N-Bis(3-aminopropyl)ethylamin, N,N-Bis(3-aminopropyl)-propylamin, N,N-Bis(3-aminopropyl)cyclohexylamin, N,N-Bis(3-aminopropyl)-2-ethylhexylamin oder Produkte aus der doppelten Cyanoethylierung und nachfolgender Reduktion von Fettaminen, welche abgeleitet sind von natürlichen Fettsäuren, insbesondere N,N-Bis(3-aminopropyl)dodecylamin oder N,N-Bis(3-aminopropyl)talgalkylamin, erhältlich als Triameen^{®} Y12D bzw. Triameen^{®} YT (von Akzo Nobel).

Bevorzugt sind solche weitere Polyamine nicht Bestandteil des Addukts **AD,** d.h. sie waren bei der Herstellung des Adduktes **AD** nicht zugegen und enthalten keine an Polyepoxid-Struktureinheiten adduktierten Anteile.

Als weiteres Polyamin bevorzugt ist ein Polyoxyalkylendi- oder -triamin wie insbesondere Jeffamine^{®} D-230, Jeffamine^{®} D-400 oder Jeffamine^{®} T-403 (von Huntsman). Damit kann die Dehnbarkeit des Klebstoffs nach der Aushärtung erhöht werden.

Zusätzlich kann die Härter-Komponente weitere gegenüber Epoxiden reaktive Verbindungen enthalten, insbesondere die Folgenden:
- primäre Monoamine wie insbesondere Hexylamin, Benzylamin oder Furfurylamin;
- aromatische Polyamine, wie insbesondere m- und p-Phenylendiamin, 4,4'-, 2,4'- und/oder 2,2'-Diaminodiphenylmethan, 3,3'-Dichloro-4,4'-diaminodiphenylmethan (MOCA), 2,4- und/oder 2,6-Toluylendiamin, Mischungen von 3,5-Dimethylthio-2,4- und -2,6-toluylendiamin (erhältlich als Ethacure^{®} 300 von Albemarle), Mischungen von 3,5-Diethyl-2,4- und -2,6-toluylendiamin (DETDA), 3,3',5,5'-Tetraethyl-4,4'-diaminodiphenylmethan (M-DEA), 3,3',5,5'-Tetraethyl-2,2'-dichloro-4,4'-diaminodiphenylmethan (M-CDEA), 3,3'-Diisopropyl-5,5'-dimethyl-4,4'-diaminodiphenylmethan (M-MIPA), 3,3',5,5'-Tetraisopropyl-4,4'-diaminodiphenylmethan (M-DIPA), 4,4'-Diaminodiphenylsulfon (DDS), 4-Amino-N-(4-aminophenyl)benzolsulfonamid, 5,5'-Methylendianthranilsäure, Dimethyl-(5,5'-methylendianthranilat), 1,3-Propylen-bis(4-aminobenzoat), 1,4-Butylen-bis(4-aminobenzoat), Polytetramethylenoxid-bis(4-aminobenzoat) (erhältlich als Versalink^{®} von Air Products), 1,2-Bis(2-aminophenylthio)ethan, 2-Methylpropyl-(4-chloro-3,5-diaminobenzoat) oder tert.Butyl-(4-chloro-3,5-diaminobenzoat);
- Addukte von weiteren Polyaminen mit Epoxiden oder Epoxidharzen, insbesondere Addukte der vorgängig genannten Amine mit Dipropylenglykol- oder Polypropylengylkol-Diglydicylethern, oder Addukte von MXDA und/oder IPDA mit Diepoxiden wie insbesondere Bisphenol A- und/oder Bisphenol F-Diglycidylethern, oder Addukte von MPMD oder 1,2-Propylendiamin mit Monoepoxiden wie insbesondere Kresylglycidylether im Molverhältnis von ungefähr 1:1, oder Umsetzungsprodukte aus Aminen und Epichlorhydrin, insbesondere jenes von 1,3-Bis(aminomethyl)benzol, kommerziell erhältlich als Gaskamine^{®} 328 (von Mitsubishi Gas Chemical);
- Polyamidoamine, insbesondere Umsetzungsprodukte aus einer ein- oder mehrwertigen Carbonsäure, beziehungsweise deren Ester oder Anhydride, insbesondere einer Dimerfettsäure, mit einem im stöchiometrischen Überschuss eingesetzten aliphatischen, cycloaliphatischen oder aromatischen Polyamin, insbesondere einem Polyalkylenamin wie beispielsweise DETA oder TETA, insbesondere die kommerziell erhältlichen Polyamidoamine Versamid® 100, 125, 140 oder 150 (von Cognis), Aradur® 223, 250 oder 848 (von Huntsman), Euretek® 3607 oder 530 (von Huntsman) oder Beckopox^{®} EH 651, EH 654, EH 655, EH 661 oder EH 663 (von Cytec); oder
- Mannich-Basen erhalten aus der Umsetzung von Phenolen mit Aldehyden, insbesondere Formaldehyd, und aliphatischen oder cycloaliphatischen Aminen, insbesondere Phenalkamine, d.h. Mannich-Basen von Cardanol (langkettigen Alk(en)ylphenolen und -resorcinen gewonnen durch thermische Behandlung von Cashewnussschalenöl-Extrakten, enthaltend als Hauptkomponente 3-(Pentadeca-8,11,14-trienyl)phenol), insbesondere die kommerziellen Typen Cardolite^{®} NX-5607 oder NX-5608 (von Cardolite), oder Aradur^{®} 3440, 3441, 3442 oder 3460 (von Huntsman), oder Beckopox^{®} EH 614, EH 621, EH 624, EH 628 oder EH 629 (von Cytec);
- flüssige Mercaptan-terminierte Polysulfid-Polymere, bekannt unter dem Handelsnamen Thiokol^{®} (von Morton Thiokol; beispielsweise erhältlich von SPI Supplies, oder von Toray Fine Chemicals), insbesondere die Typen LP-3, LP-33, LP-980, LP-23, LP-55, LP-56, LP-12, LP-31, LP-32 oder LP-2; sowie weiterhin bekannt unter dem Markennamen Thioplast^{®} (von Akzo Nobel), insbesondere die Typen G 10, G 112, G 131, G 1, G 12, G 21, G 22, G 44 oder G 4;
- Mercaptan-terminierte Polyoxyalkylen-Derivate, erhältlich beispielsweise durch Umsetzung von Polyoxyalkylendi- oder -triolen entweder mit Epichlorhydrin oder mit einem Alkylenoxid, gefolgt von Natriumhydrogensulfid, kommerziell erhältlich beispielsweise als Gabepro^{®} GPM-800 (von Gabriel Performance Products) oder unter dem Markennamen Capcure^{®} (von Cognis), insbesondere die Typen WR-8, LOF oder 3-800;
- Polyester von Thiocarbonsäuren, beispielsweise Pentaerythritoltetramercaptoacetat, Trimethylolpropantrimercaptoacetat, Glykoldimercaptoacetat, Pentaerythritoltetra-(3-mercaptopropionat), Trimethylolpropantri(3-mercaptopropionat) oder Glykoldi-(3-mercaptopropionat), oder Veresterungsprodukte von Polyoxyalkylendiolen oder -triolen, ethoxyliertem Trimethylolpropan oder Polyester-Diolen mit Thiocarbonsäuren wie Thioglykolsäure oder 2- oder 3-Mercaptopropionsäure; oder
- weitere Mercaptogruppen aufweisende Verbindungen, wie insbesondere 2,4,6-Trimercapto-1,3,5-triazin, 2,2'-(Ethylendioxy)-diethanthiol (Triethylenglykol-dimercaptan) oder Ethandithiol.

Bevorzugt weist die Härter-Komponente einen Gehalt an Addukt **AD** im Bereich von 20 bis 80 Gewichts-%, insbesondere 30 bis 80 Gewichts-%, bezogen auf die in der Härter-Komponente enthaltenen, mit Epoxidgruppen reaktiven Verbindungen auf.

Bevorzugt weist die Härter-Komponente einen Gehalt an Beschleuniger **B** im Bereich von 5 bis 70 Gewichts-%, besonders bevorzugt 10 bis 65 Gewichts-%, insbesondere 15 bis 60 Gewichts-%, bezogen auf die in der Härter-Komponente enthaltenen, mit Epoxidgruppen reaktiven Verbindungen auf.

Besonders bevorzugt weist die Härter-Komponente einen Gehalt an DMAPAPA im Bereich von 10 bis 70 Gewichts-%, besonders bevorzugt 15 bis 60 Gewichts-%, bezogen auf die in der Härter-Komponente enthaltenen, mit Epoxidgruppen reaktiven Verbindungen auf. Ein hoher Gehalt an DMAPAPA ermöglicht hohe Druckfestigkeiten, wobei bei Gehalten oberhalb von etwa 70 Gewichts-% die erreichten Glasübergangstemperaturen reduziert sind.

Eine besonders bevorzugte Härter-Komponente enthält
- 30 bis 80 Gewichts-% Addukt **AD,**
- 15 bis 60 Gewichts-% DMAPAPA, und
- 0 bis 40 Gewichts-% weitere Polyamine,
   bezogen auf die in der Härter-Komponente enthaltenen, mit Epoxidgruppen reaktiven Verbindungen.
Als weiteres Polyamin geeignet ist insbesondere ein Polyoxyalkylendi- odertriamin.

Die Härter-Komponente ist bevorzugt weitgehend frei von Aminen mit einem Molekulargewicht unterhalb von 120 g/mol. Bevorzugt enthält sie weniger als 2 Gewichts-%, insbesondere weniger als 1 Gewichts-%, Amine mit einem Molekulargewicht unterhalb von 120 g/mol. So ist sie besonders geruchsarm.

Die Härter-Komponente kann mindestens einen Beschleuniger enthalten. Als Beschleuniger geeignet sind Substanzen, welche die Reaktion zwischen Aminogruppen und Epoxidgruppen beschleunigen, insbesondere Säuren oder zu Säuren hydrolysierbare Verbindungen, insbesondere organische Carbonsäuren wie Essigsäure, Benzoesäure, Salicylsäure, 2-Nitrobenzoesäure, Milchsäure, organische Sulfonsäuren wie Methansulfonsäure, p-Toluolsulfonsäure oder 4-Dodecylbenzolsulfonsäure, Sulfonsäureester, andere organische oder anorganische Säuren wie insbesondere Phosphorsäure, oder Mischungen der vorgenannten Säuren und Säureester; tertiäre Amine wie insbesondere die bereits genannten Beschleuniger **B,** oder 1,4-Diazabicyclo[2.2.2]octan, Triethanolamin, Imidazole wie insbesondere N-Methylimidazol, N-Vinylimidazol oder 1,2-Dimethylimidazol, Salze solcher tertiärer Amine, quaternäre Ammoniumsalze, wie insbesondere Benzyltrimethylammoniumchlorid, Amidine wie insbesondere 1,8-Diazabicyclo[5.4.0]undec-7-en, Guanidine wie insbesondere 1,1,3,3-Tetramethylguanidin, Phenole, insbesondere Bisphenole, Phenol-Harze oder Mannich-Basen wie insbesondere die bereits als Beschleuniger **B** genannten 2,4,6-Tris(dimethylaminomethyl)phenol oder 2,4,6-Tris(N,N-dimethyl-4-amino-2-azabutyl)phenol, Phosphite wie insbesondere Di-oderTriphenytphosphite, oder Mercaptogruppen aufweisende Verbindungen. Als Beschleuniger bevorzugt sind Säuren, tertiäre Amine oder Mannich-Basen.
Am meisten bevorzugt ist Salicylsäure oder 2,4,6-Tris(dimethylaminomethyl)-phenol oder 2,4,6-Tris(N,N-dimethyl-4-amino-2-azabutyl)phenol oder eine Kombination davon.

Bevorzugt enthält eine Härter-Komponente, welche DMAPAPA als Beschleuniger **B** enthält, keine weiteren Beschleuniger. Ein solcher Klebstoff ist niedrigviskos, ermöglicht eine schnelle Aushärtung und hohe Festigkeiten und ist toxikologisch besonders unbedenklich, da DMAPAPA bei der Aushärtung ins ausgehärtete Epoxidharz-Polymer eingebaut wird.

Ein weiterer Gegenstand der Erfindung ist ein Verfahren zum Herstellen der Härter-Komponente des Epoxidharz-Klebstoffs umfassend die Schritte
- Herstellen des Addukts **AD** durch Umsetzen von mindestens einem Polyepoxid mit mindestens einem Amin der Formel (I) und gegebenenfalls weiteren Aminen, wobei die primären Aminogruppen gegenüber den Epoxidgruppen im stöchiometrischen Überschuss vorliegen, bei einer Temperatur im Bereich von 40 bis 140 °C, insbesondere 50 bis 120 °C, bis alle Epoxidgruppen umgesetzt sind,
- Mischen des erhaltenen Addukts **AD** mit mindestens einem Beschleuniger **B,** welcher mindestens eine Dimethylaminogruppe aufweist,
- gegebenenfalls Hinzufügen von mindestens einem anorganischen Füllstoff und gegebenenfalls weiteren Substanzen.

Bei der Umsetzung zum Addukt **AD** liegt das Verhältnis zwischen der Anzahl der vorhandenen primären Aminogruppen und der Anzahl der vorhandenen Epoxidgruppen bevorzugt im Bereich von 3 bis 12, besonders bevorzugt 4 bis 8, insbesondere 4 bis 6.
Dabei sind die bereits genannten Polyepoxide, Amine der Formel (I), Beschleuniger **B** und weiteren Substanzen geeignet bzw. bevorzugt, wie vorgängig beschrieben.
Das Addukt **AD** kann direkt in Anschluss an die Herstellung mit dem Beschleuniger **B** vermischt werden, oder es kann in einem geeigneten Gebinde während einigen Tagen bis zu mehreren Monaten gelagert werden, bevor es mit dem Beschleuniger **B** vermischt und zur beschriebenen Härter-Komponente verarbeitet wird.
Bevorzugt weist das Addukt **AD** vor dem Vermischen mit dem Beschleuniger **B** eine Viskosität bei 25 °C von kleiner als 100 Pa·s, besonders bevorzugt kleiner als 50 Pa·s, insbesondere kleiner als 30 Pa·s, auf.

Die Harz-Komponente des Epoxidharz-Klebstoffs enthält mindestens ein Epoxidharz.
Als Epoxidharz sind übliche technische Epoxidharze geeignet. Diese werden auf bekannte Art und Weise erhalten, zum Beispiel aus der Oxidation der entsprechenden Olefine oder aus der Reaktion von Epichlorhydrin mit den entsprechenden Polyolen, Polyphenolen oder Aminen.
Als Epoxidharz besonders geeignet sind sogenannte Polyepoxid-Flüssigharze, im folgenden als "Flüssigharz" bezeichnet. Diese weisen eine Erstarrungstemperatur unterhalb von 25°C auf.
Ebenfalls möglich als Epoxidharz sind sogenannte Festharze, welche eine Erstarrungstemperatur oberhalb von 25°C aufweisen und sich zu bei 25°C schüttfähigen Pulvern zerkleinern lassen.

Geeignete Epoxidharze sind insbesondere aromatische Epoxidharze, insbesondere die Glycidylisierungsprodukte von:
- Bisphenol-A, Bisphenol-F oder Bisphenol-A/F, wobei A für Aceton und F für Formaldehyd steht, welche als Edukte zur Herstellung dieser Bisphenole dienten. Im Fall von Bisphenol-F können auch Stellungsisomere vorhanden sein, insbesondere abgeleitet von 2,4'- oder 2,2'-Hydroxyphenylmethan.
- Dihydroxybenzol-Derivaten wie Resorcin, Hydrochinon oder Brenzkatechin;
- weiteren Bisphenolen oder Polyphenolen wie Bis(4-hydroxy-3-methylphenyl)methan, 2,2-Bis(4-hydroxy-3-methylphenyl)propan (Bisphenol-C), Bis-(3,5-dimethyl-4-hydroxyphenyl)methan, 2,2-Bis(3,5-dimethyl-4-hydroxyphenyl)propan, 2,2-Bis(3,5-dibromo-4-hydroxyphenyl)propan, 2,2-Bis(4-hydroxy-3-tert.butylphenyl)propan, 2,2-Bis(4-hydroxyphenyl)butan (Bisphenol-B), 3,3-Bis(4-hydroxyphenyl)pentan, 3,4-Bis(4-hydroxyphenyl)hexan, 4,4-Bis(4-hydroxyphenyl)heptan, 2,4-Bis(4-hydroxyphenyl)-2-methylbutan, 2,4-Bis-(3,5-dimethyl-4-hydroxyphenyl)-2-methylbutan, 1,1-Bis(4-hydroxyphenyl)-cyclohexan (Bisphenol-Z), 1,1-Bis(4-hydroxyphenyl)-3,3,5-trimethylcyclohexan (Bisphenol-TMC), 1,1-Bis(4-hydroxyphenyl)-1-phenylethan, 1,4-Bis[2-(4-hydroxyphenyl)-2-propyl]benzol (Bisphenol-P), 1,3-Bis[2-(4-hydroxyphenyl)-2-propyl]benzol (Bisphenol-M), 4,4'-Dihydroxydiphenyl (DOD), 4,4'-Dihydroxybenzophenon, Bis(2-hydroxynaphth-1-yl)methan, Bis(4-hydroxynaphth-1-yl)methan, 1,5-Dihydroxynaphthalin, Tris(4-hydroxyphenyl)methan, 1,1,2,2-Tetrakis(4-hydroxyphenyl)ethan, Bis(4-hydroxyphenyl)ether oder Bis(4-hydroxyphenyl)sulfon;
- Kondensationsprodukten von Phenolen mit Formaldehyd, die unter sauren Bedingungen erhalten werden, wie Phenol-Novolaken oder Kresol-Novolaken, auch Epoxid Novolak Harze oder Novolak-Glycidylether genannt;
- aromatischen Aminen, wie Anilin, Toluidin, 4-Aminophenol, 4,4'-Methylendiphenyldiamin, 4,4'-Methylendiphenyldi-(N-methyl)amin, 4,4'-[1,4-Phenylen-bis(1-methylethyliden)]bisanilin (Bisanilin-P) oder 4,4'-[1,3-Phenylen-bis(1-methylethyliden)]bisanilin (Bisanilin-M).

Weitere geeignete Epoxidharze sind aliphatische oder cycloaliphatische Polyepoxide, insbesondere
- Glycidylether von gesättigten oder ungesättigten, verzweigten oder unverzweigten, zyklischen oder offenkettigen di-, tri- oder tetrafunktionellen C₂-bis C₃₀-Alkoholen, insbesondere Ethylenglykol, Propylenglykol, Butylenglykol, Hexandiol, Octandiol, Polypropylenglykolen, Dimethylolcyclohexan, Neopentylglykol, Dibromoneopentylglykol, Rizinusöl, Trimethylolpropan, Trimethylolethan, Pentaerythrol, Sorbit oder Glycerin, oder alkoxyliertes Glycerin oder alkoxyliertes Trimethylolpropan;
- hydrierte Bisphenol-A-, -F- oder -A/F-Flüssigharze, beziehungsweise Glycidylisierungsprodukte von hydriertem Bisphenol-A, -F oder -A/F;
- N-Glycidylderivate von Amiden oder heterocyclischen Stickstoffbasen, wie Triglycidylcyanurat oder Triglycidylisocyanurat, oder Umsetzungsprodukte von Epichlorhydrin mit Hydantoin.
- Epoxidharze aus der Oxidation von Olefinen, wie insbesondere Vinylcylohexen, Dicyclopentadien, Cyclohexadien, Cyclododecadien, Cyclododecatrien, Isopren, 1,5-Hexadien, Butadien, Polybutadien oder Divinylbenzol.

Als Epoxidharz bevorzugt ist ein Flüssigharz auf der Basis eines Bisphenols, insbesondere ein Diglycidylether von Bisphenol-A, Bisphenol-F oder Bisphenol-A/F, wie sie kommerziell beispielsweise von Dow, Olin, Huntsman oder Momentive erhältlich sind. Diese Flüssigharze weisen eine für Epoxidharze niedrige Viskosität und im ausgehärteten Zustand gute Eigenschaften als Beschichtung auf. Sie können Anteile von Bisphenol A-Festharz oder Novolak-Glycidylethern enthalten.

Die Harz-Komponente kann einen Reaktivverdünner, insbesondere einen mindestens eine Epoxidgruppe aufweisenden Reaktivverdünner, enthalten. Als Reaktivverdünner geeignet sind insbesondere die Glycidylether von ein- oder mehrwertigen Phenolen oder aliphatischen oder cycloaliphatischen Alkoholen, wie insbesondere die bereits genannten Polyglycidylether von Di- oder Polyolen, insbesondere 1,4-Butandiol-Diglycidylether, 1,6-Hexandiol-Diglycidylether oder Glycidylether von Glycerol, Polyglycerol oder Trimethylolpropan, oder Phenylglycidylether, Kresylglycidylether, Guaiacolglycidylether, 4-Methoxyphenylglycidylether, p-n-Butylphenylglycidylether, p-tert.Butylphenylglycidylether, 4-Nonylphenylglycidylether, 4-Dodecylphenylglycidylether, Cardanolglycidylether, Benzylglycidylether, Allylglycidylether, Butylglycidylether, Hexylglycidylether, 2-Ethylhexylglycidylether, oder Glycidylether von natürlichen Alkoholen wie insbesondere C₈- bis C₁₀-Alkylglycidylether oder C₁₂- bis C₁₄-Alkylglycidylether.
Bevorzugt enthält die Harz-Komponente mindestens einen Reaktivverdünner, insbesondere einen Diglycidylether. Ein solcher Reaktivverdünner verbessert die Verarbeitbarkeit, ohne die Festigkeit allzusehr zu beeinträchtigen.

Bevorzugt umfasst der Epoxidharz-Klebstoff insgesamt 50 bis 95 Gewichts-%, insbesondere 50 bis 90 Gewichts-%, anorganische Füllstoffe.
In einer bevorzugten Ausführungsform der Erfindung enthält die Harz-Komponente 50 bis 90 Gewichts-% anorganische Füllstoffe und die Härter-Komponente enthält 50 bis 95 Gewichts-% anorganische Füllstoffe.
In einer weiteren Ausführungsform der Erfindung sind die Harz- und die Härter-Komponente weitgehend frei von anorganischen Füllstoffen, wobei anorganische Füllstoffe als separate Füllstoff-Komponente vorhanden sind.

Als anorganischer Füllstoff geeignet ist insbesondere gemahlenes oder gefälltes Calciumcarbonat, welches gegebenenfalls mit Fettsäure, insbesondere

Stearaten, beschichtet ist, Baryt (Schwerspat), Talk, Quarzmehl, Quarzsand, Siliciumcarbid, Eisenglimmer, Dolomit, Wollastonit, Kaolin, Mica (Kalium-Aluminium-Silikat), Molekularsieb, Aluminiumoxid, Aluminiumhydroxid, Magnesiumhydroxid, Kieselsäure, Zement, Gips, Flugasche. Als anorganischer Füllstoff bevorzugt sind silikatische Füllstoffe, insbesondere Quarzmehl, Quarzsand, Siliciumcarbid, Wollastonit oder Mica.

Besonders bevorzugt enthält der Epoxidharz-Klebstoff Quarzmehl und/oder Quarzsand als anorganischen Füllstoff, insbesondere eine Kombination aus Quarzmehl und Quarzsand. Ein solcher Klebstoff ermöglicht besonders hohe Druckfestigkeiten.

Bevorzugt umfasst der Epoxidharz-Klebstoff insgesamt 50 bis 90 Gewichts-%, insbesondere 60 bis 85 Gewichts-%, Quarzmehl und/oder Quarzsand. Zusätzlich enthält der Klebstoff bevorzugt mindestens einen weiteren anorganischen Füllstoff, insbesondere ein gefälltes, mit Fettsäure beschichtetes Calciumcarbonat. Dieses kann das Absetzen des Quarz-Füllstoffes in den Komponenten während der Lagerzeit vermindern.

Der Epoxidharz-Klebstoff kann zusätzliche Bestandteile enthalten, wobei diese als Bestandteil der Harz-Komponente oder der Härter-Komponente oder als Bestandteil von beiden Komponenten vorhanden sein können. Gegenüber Epoxidgruppen reaktive Bestandteile sind bevorzugt Bestandteil der Härter-Komponente, gegenüber Aminogruppen reaktive Bestandteile sind bevorzugt Bestandteil der Harz-Komponente.

Bevorzugt enthält der Epoxidharz-Klebstoff mindestens ein Thixotropiermittel. Als Thixotropiermittel geeignet sind insbesondere pyrogene Kieselsäuren. Besonders geeignet sind Thixotropiermittel, welche die Thixotropie erst durch das Mischen der Komponenten ("in situ") aufbauen. Bevorzugte in situ-Thixotropiermittel sind Kombinationen von pyrogenen Kieselsäuren mit Glykolen und/oder Polyethyleniminen, wobei die pyrogene Kieselsäure in der ersten Komponente und das Glykol oder Polyethylenimin in der zweiten Komponente enthalten sind. Als pyrogene Kieselsäure bevorzugt sind unmodifizierte (hydrophile) Typen. Als Glykol bevorzugt sind Polyethylenglykole. Als Polyethylenimin bevorzugt sind Polyethylenimine mit mittlerem Molekulargewicht im Bereich von 800 bis 2'000'000, insbesondere 2000 bis 750'000, besonders bevorzugt 5000 bis 100'000, g/mol, wie sie kommerziell unverdünnt oder als wässrige Lösung erhältlich sind, beispielsweise unter dem Markennamen Lupasol^{®} (von BASF) oder Epomin^{®} (von Nippon Shokubai). Ebenfalls geeignet sind Kombinationen von pyrogenen Kieselsäuren mit Additiven wie insbesondere BYK^{®}-R 605, BYK^{®}-R 607 oder BYK^{®}-R 608 (alle von BYK Additives and Instruments). Besonders bevorzugt sind Kombinationen aus unmodizierter pyrogener Kieselsäure, insbesondere die Typen Aerosil^{®} 200 (von Evonik Industries), HDK^{®} N20 (von Wacker Chemie), CAB-O-SIL^{®} M-5 (von Cabot) oder REOLOSIL^{®} QS-102 (von Akpa Kimya), mit Polyethyleniminen, insbesondere die Typen Lupasol^{®} WF, Lupasol^{®} HF (alle von BASF) oder Epomin^{®} SP-200 (von Nippon Shokubai).

Der Epoxidharz-Klebstoff kann weiterhin mindestens einen Verdünner enthalten, insbesondere Xylol, 2-Methoxyethanol, Dimethoxyethanol, 2-Ethoxyethanol, 2-Propoxyethanol, 2-Isopropoxyethanol, 2-Butoxyethanol, 2-Phenoxyethanol, 2-Benzyloxyethanol, Benzylalkohol, Ethylenglykol, Ethylenglykoldimethylether, Ethylenglykoldiethylether, Ethylenglykoldibutylether, Ethylenglykoldiphenylether, Diethylenglykol, Diethylenglykol-monomethylether, Diethylenglykolmonoethylether, Diethylenglykol-mono-n-butylether, Diethylenglykoldimethylether, Diethylenglykoldiethylether, Diethylenglykoldi-n-butylylether, Propylenglykolbutylether, Propylenglykolphenylether, Dipropylenglykol, Dipropylenglykolmonomethylether, Dipropylenglykoldimethylether, Dipropylenglykoldi-n-butylether, N-Methylpyrrolidon, Diphenylmethan, Diisopropylnaphthalin, Erdölfraktionen wie zum Beispiel Solvesso^{®}-Typen (von Exxon), Alkylphenole wie tert.Butylphenol, Nonylphenol, Dodecylphenol und Cardanol (aus Cashewnussschalen-Öl, enthaltend als Hauptbestandteil 3-(8,11,14-Pentadecatrienyl)phenol, erhältlich beispielsweise als Cardolite NC-700 von Cardolite Corp., USA), styrolisiertes Phenol, Bisphenole, aromatische Kohlenwasserstoffharze, insbesondere Phenolgruppen-haltige Typen, alkoxyliertes Phenol, insbesondere ethoxyliertes oder propoxyliertes Phenol, insbesondere 2-Phenoxyethanol, Adipate, Sebacate, Phthalate, Benzoate, organische Phosphor- oder Sulfonsäureester oder Sulfonamide.
Bevorzugt enthält der Klebstoff keinen oder nur einen geringen Gehalt an Verdünnern. Bevorzugt enthält er maximal 10 Gewichts-%, besonders bevorzugt maximal 5 Gewichts-%, insbesondere maximal 2 Gewichts-%, Verdünner. Insbesondere ist er frei von Verdünnern. Ein solcher Epoxidharz-Klebstoff ist besonders druckfest und besonders emissionsarm.

Gegebenenfalls enthält der Klebstoff weitere Inhaltsstoffe, insbesondere ausgewählt aus den folgenden Hilfs- und Zusatzstoffen:
- Beschleuniger, insbesondere die bereits genannten;
- Fasern, insbesondere Glasfasern, Kohlefasern, Metallfasern, Keramikfasern oder Kunststofffasern wie Polyamidfasern oder Polyethylenfasern;
- Pigmente, insbesondere Titandioxid, Eisenoxide oder Chrom(III)oxid;
- Rheologie-Modifizierer, insbesondere Verdicker oder Antiabsetzmittel;
- Haftverbesserer, insbesondere Organoalkoxysilane;
- Stabilisatoren gegen Oxidation, Wärme, Licht oder UV-Strahlung;
- flammhemmende Substanzen;
- oberflächenaktive Substanzen, insbesondere Netzmittel, Verlaufsmittel, Entlüftungsmittel oder Entschäumer; und
- Biozide, wie beispielsweise Algizide oder Fungizide.

Im Epoxidharz-Klebstoff liegt das Verhältnis der Anzahl der gegenüber Epoxidgruppen reaktiven Aminwasserstoffe gegenüber der Anzahl Epoxidgruppen bevorzugt im Bereich von 0.7 bis 1.5, insbesondere 0.8 bis 1.2.

Die Komponenten des Epoxidharz-Klebstoffs werden in voneinander getrennten Gebinden gelagert. Ein geeignetes Gebinde zum Lagern der Harz- oder der Härter-Komponente ist insbesondere ein Fass, ein Hobbock, ein Beutel, ein Eimer, eine Büchse, eine Kartusche oder eine Tube. Die Komponenten sind lagerfähig, das heisst, dass sie vor ihrer Anwendung während mehreren Monaten bis zu einem Jahr und länger aufbewahrt werden können, ohne dass sie sich in ihren jeweiligen Eigenschaften in einem für ihren Gebrauch relevanten Ausmass verändern. Zur Anwendung des Epoxidharz-Klebstoffs werden die Harz- und die Härter-Komponente und eine gegebenenfalls vorhandene Füllstoff-Komponente kurz vor oder während der Applikation miteinander vermischt. Das Mischungsverhältnis zwischen den Komponenten wird bevorzugt so gewählt, dass die gegenüber Epoxidgruppen reaktiven Gruppen der Härter-Komponente in einem geeigneten Verhältnis zu den Epoxidgruppen der Harz-Komponente stehen, wie vorgängig beschrieben. In Gewichtsteilen liegt das Mischungsverhältnis zwischen der Harz-Komponente und der Härter-Komponente üblicherweise im Bereich von 1:10 bis 10:1, insbesondere 10:1 bis 1:1.
Das Vermischen der Komponenten erfolgt mittels eines geeigneten Verfahrens. Die Vermischung kann kontinuierlich oder batchweise erfolgen. Falls das Vermischen vor der Applikation erfolgt, muss darauf geachtet werden, dass zwischen dem Vermischen der Komponenten und der Applikation nicht zu viel Zeit vergeht, da es dadurch zu Störungen, beispielsweise einem verlangsamten oder unvollständigen Aufbau der Haftung, kommen kann. Die Vermischung erfolgt insbesondere bei Umgebungstemperatur, welche typischerweise im Bereich von etwa 0 bis 40°C, bevorzugt bei etwa 5 bis 30°C, liegt.
Beim Vermischen der Komponenten beginnt die Aushärtung durch chemische Reaktion. Dabei reagieren die Epoxidgruppen mit den Aminwasserstoff tragenden Aminogruppen und gegebenenfalls vorhandenen weiteren gegenüber Epoxidgruppen reaktiven Gruppen unter Ringöffnung zu Aminoalkohol-Einheiten. Weitere Epoxidgruppen reagieren untereinander unter anionischer Polymerisation, insbesondere katalysiert durch Dimethylaminogruppen. Als Ergebnis dieser Reaktionen härtet der Klebstoff zu einem vernetzten Material aus. Dem Fachmann ist bekannt, dass primäre Aminogruppen gegenüber Epoxidgruppen difunktionell sind.
Die Aushärtung erfolgt insbesondere bei Umgebungstemperatur. Sie erstreckt sich typischerweise über einige Stunden bis Tage, bis sie unter den gegebenen Bedingungen weitgehend abgeschlossen ist. Wichtige Einflussgrössen sind dabei die Temperatur, die Stöchiometrie und die Anwesenheit von Beschleunigern.

Als Ergebnis der Aushärtungsreaktion wird ein ausgehärteter Klebstoff erhalten.

Ein weiterer Gegenstand der Erfindung ist somit ein ausgehärteter Klebstoff, erhalten aus dem beschriebenen Epoxidharz-Klebstoff nach dem Mischen der Komponenten und deren Aushärtung.

Typischerweise weist der Klebstoff nach dem Vermischen der Komponenten eine pastöse Konsistenz auf. Bei der Applikation wird der frisch vermischte Klebstoff innerhalb seiner Offenzeit auf mindestens eines der zu verklebenden Substrate aufgetragen und die beiden Substrate innerhalb der Offenzeit des Klebstoffs zu einer Verklebung gefügt.
Als "Offenzeit" wird dabei die Zeitspanne zwischen dem Mischen der Komponenten und dem Zeitpunkt, ab welchem keine ausreichende Verformbarkeit des Klebstoffs und/oder kein ausreichender Haftungsaufbau zu den Substraten mehr gewährleistet ist.

Der frisch vermischte Klebstoff wird insbesondere mittels Pinsel, Rolle, Spatel, Rakel, Kelle, oder aus einer Tube, Kartusche oder Dosiervorrichtung appliziert bzw. aufgetragen.

Der Epoxidharz-Klebstoff wird bevorzugt bei Temperaturen im Bereich von 0 bis 100 °C, bevorzugt 5 bis 80 °C, insbesondere 10 bis 50 °C, verwendet, besonders bevorzugt bei Umgebungstemperaturen im Freien, in gedeckten Unterständen oder in Gebäuden, bevorzugt im Bereich von 0 bis 40 °C, insbesondere 5 bis 30 °C.

Der Epoxidharz-Klebstoff ist besonders geeignet für Verwendungen in der Bauindustrie, insbesondere
- für die Armierung von Bauwerken mittels Stahllamellen oder Lamellen aus Kohlefaser-verstärkten Composite-Kunststoffen (CFK),
- für Konstruktionen, welche geklebte Beton-Fertigteile enthalten, insbesondere Brücken oder Betontürme für beispielsweise Windkraftanlagen, Schächte, Rohrleitungen oder Tunnels, oder für Konstruktionen, welche geklebte Natursteine, keramische Elemente oder Teile aus Faserzement, Stahl, Gusseisen, Aluminium, Holz oder Polyester enthalten,
- für die Verankerung von Dübeln oder Stahlstäben in Bohrlöchern,
- für die Fixierung von beispielsweise Geländern, Brüstungen oder Türrahmen,
- für Reparaturen wie insbesondere die Verfüllung von Kanten, Löchern oder Fugen bei der Betoninstandsetzung,
- für das Aufkleben von Folien aus Polyvinylchlorid (PVC), flexibilisiertem Polyolefin (Combiflex^{®}), haftungsmodifiziertem chlorsulfoniertem Polyethylen (Hypalon^{®}) auf Beton oder Stahl.
Weitere Einsatzgebiete betreffen das strukturelle Kleben in der Bau- oder Fertigungsindustrie, insbesondere als Klebemörtel, Montageklebstoff, Armierungsklebstoff wie insbesondere für das Verkleben von Lamellen aus CFK oder Stahl auf Beton, Mauerwerk oder Holz, als Element-Klebstoff für beispielsweise Brückenelemente, Sandwichelementklebstoff, Fassadenelementklebstoff, Verstärkungsklebstoff, Karrosserieklebstoff oder Halbschalenklebstoff für Rotorblätter von Windturbinen.
Ebenfalls geeignet ist der Klebstoff für das Verfüllen von Hohlräumen wie Rissen, Spalten oder Bohrlöchern, wobei der Klebstoff in den Hohlraum gefüllt oder injiziert wird und nach der Aushärtung diesen ausfüllt und die Flanken des Hohlraums kraftschlüssig miteinander verbindet bzw. verklebt.

Besonders geeignet ist der Klebstoff für Anwendungen, bei welchen bei tiefen Temperaturen, insbesondere im Bereich von 0 bis 10 °C, ein schneller Aufbau der Festigkeit erfolgen soll, wie beispielsweise bei der Montage von Brücken oder anderen Bauten im Freien.

Ganz besonders geeignet ist der Klebstoff für Anwendungen, bei welchen eine besonders hohe Druckfestigkeit erreicht werden soll, insbesondere als Klebemörtel für das Aufeinanderkleben von Elementen aus hochfestem Beton zu turmartigen Konstruktionen.

Ein weiterer Gegenstand der Erfindung ist die Verwendung des beschriebenen Epoxidharz-Klebstoffs in einem Verfahren zum Verkleben umfassend die Schritte
- Mischen der Komponenten mit einer geeigneten Methode und entweder
   - Applizieren des gemischten Klebstoffs auf mindestens eines der zu verklebenden Substrate,
   - Fügen der Substrate zu einer Verklebung innerhalb der Offenzeit des Klebstoffs,
   oder
   - Applizieren des gemischten Klebstoffs in einen Hohlraum oder Spalt zwischen zwei Substraten,
   - gegebenenfalls Einfügen eines Ankers in den Hohlraum oder Spalt innerhalb der Offenzeit des Klebstoffs,
   gefolgt von der Aushärtung des Klebstoffs.

Als "Anker" wird dabei insbesondere ein Armierungseisen, ein Gewindestab oder ein Bolzen bezeichnet. Ein solcher wird insbesondere so in einer Mauer, Wand, Decke oder in einem Fundament eingeklebt bzw. verankert, dass ein Teil davon kraftschlüssig verklebt ist und ein Teil davon vorsteht und konstruktiv belastet werden kann.

Bevorzugt erfolgt dabei die Applikation und Aushärtung des Klebstoffs bei Umgebungstemperatur, insbesondere bei einer Temperatur im Bereich von 0 bis 40 °C, insbesondere 5 bis 30 °C. Dies ermöglicht eine besonders einfache Handhabung des Klebstoffs und ist insbesondere im Freien, auf Baustellen und in ungeheizten Industriehallen vorteilhaft.

Die Applikation des gemischten Klebstoffs erfolgt auf mindestens ein Substrat, wobei die Folgenden besonders geeignet sind:
- Glas, Glaskeramik, Beton, Mörtel, Zement-Estrich, Anhydrit-Estrich, Magnesia-Estrich, Backstein, Ziegel, Gips oder Natursteine wie Granit oder Marmor;
- Metalle oder Legierungen wie Aluminium, Eisen, Stahl oder Buntmetalle, oder oberflächenveredelte Metalle oder Legierungen wie verzinkte oder verchromte Metalle;
- Holz, mit Harzen, beispielsweise Phenol-, Melamin- oder Epoxidharzen, gebundene Holzwerkstoffe oder weitere sogenannte Polymer-Composites;
- Kunststoffe, insbesondere Hart- oder Weich-PVC, ABS, Polycarbonat (PC), Polyamid (PA), Polyester, PMMA, Epoxidharze, PUR, POM, PO, PE, PP, EPM oder EPDM, wobei die Kunststoffe gegebenenfalls mittels Plasma, Corona oder Flammen oberflächenbehandelt sind;
- Faserverstärkte Kunststoffe, wie Kohlefaser-verstärkte Composite-Kunststoffe (CFK), Glasfaser-verstärkte Kunststoffe (GFK) oder Sheet Moulding Compounds (SMC);
- beschichtete Substrate, wie pulverbeschichtete Metalle oder Legierungen;
- Farben oder Lacke.
Die Substrate können bei Bedarf vor dem Applizieren des Klebstoffs vorbehandelt werden. Derartige Vorbehandlungen umfassen insbesondere physikalische und/oder chemische Reinigungsverfahren, beispielsweise Schleifen, Sandstrahlen, Kugelstrahlen, Bürsten und/oder Abblasen, sowie weiterhin Behandeln mit Reinigern oder Lösemitteln oder das Aufbringen eines Haftvermittlers, einer Haftvermittlerlösung oder eines Primers.
Poröse mineralische Substrate sind bevorzugt so vorbehandelt, dass eine offenporige, weitgehend staubfreie Oberfläche ohne Zementhaut vorliegt.

Aus der Verwendung des Klebstoffs entsteht ein verklebter Artikel. Dabei handelt es sich insbesondere um ein Haus, ein Badezimmer, eine Küche, eine Treppe, ein Dach, ein Balkon, eine Terrasse, ein Parkdeck, eine Brücke, ein Schacht, eine Rohrleitung, ein Tunnel, ein Sandwichelement einer Leichtbaustruktur, ein Solarpanel wie Photovoltaik- oder Solarthermie-Module, eine Fassade, ein Haushaltsapparat, ein Rotorblatt einer Windturbine, einen Betonturm, ein Automobil, einen Bus, einen Lastkraftwagen, ein Schienenfahrzeug, ein Schiff, ein Flugzeug, einen Helikopter, oder ein Anbauteil davon.

Besonders bevorzugt wird der Epoxidharz-Klebstoff verwendet zur Herstellung einer Klebeverbindung mit einer Druckfestigkeit von mindestens 120 MPa, bevorzugt mindestens 125 MPa, bestimmt nach ASTM D695 an während 7 Tagen bei Raumtemperatur ausgehärteten Prüfkörpern bei einer Prüfgeschwindigkeit von 1.3 mm/min, wie in den nachfolgenden Beispielen beschrieben.

Bevorzugt ist diese Klebeverbindung Bestandteil eines Betonturms einer Windkraftanlage.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.
"AHEW" steht für das Aminwasserstoff-Equivalentgewicht.
"EEW" steht für das Epoxid-Equivalentgewicht.
Als "Normklima" wird eine Temperatur von 23±1 °C und eine relative Luftfeuchtigkeit von 50±5% bezeichnet. "NK" steht für "Normklima".

Die **Viskosität** wurde auf einem thermostatisierten Kegel-Platten-Viskosimeter Rheotec RC30 (Kegeldurchmesser 50 mm, Kegelwinkel 1°, Kegelspitze-Platten-Abstand 0.05 mm) bei einer Scherrate von 10 s⁻¹ gemessen.

### Verwendete kommerzielle Substanzen:

- BA-DGE:: Bisphenol-A-Diglycidylether, EEW ca. 190 g/Eq (Araldite^{®} GY 250, von Huntsman).
- BuD-DGE:: 1,4-Butandiol-Diglycidylether, EEW ca.122 g/Eq (Araldite^{®} DY-D, von Huntsman).
- D.E.N.^{®} 431:: Epoxy-Novolak-Harz (Phenol-Novolak-Glycidylether), EEW ca.175 g/Eq, Funktionalität 2.8 (von Olin).
- D.E.N.^{®} 438:: Epoxy-Novolak-Harz (Phenol-Novolak-Glycidylether), EEW ca.180 g/Eq, Funktionalität 3.6 (von Olin).
- Solvesso:: Lösemittel auf Basis aromatischer Kohlenwasserstoffe (Solvesso^{®} 150 ND, von ExxonMobil).
- BHMT-(50-78%):: technische Qualität von Bis(6-aminohexyl)amin mit einer Reinheit im Bereich von 50 bis 78 Gewichts-%, AHEW ca. 48 g/Eq (Dytek^{®} BHMT Amine (50-78%), von Invista)
- TETA:: Triethylentetramin (TETA), AHEW ca. 27 g/Eq (technisch, von Huntsman).
- TEPA:: Tetraethylenpentamin (TEPA), AHEW ca. 30 g/Eq (technisch, von Huntsman).
- PEHA:: Pentaethylenhexamin, AHEW ca. 34 g/Eq (technisch, von Delamine).
- Ethylenamin E-100:: Mischung enthaltend TEPA, PEHA, HEHA und höhermolekulare Anteile, AHEW ca. 37 g/Eq (von Huntsman).
- DMAPAPA:: 3-(3-(Dimethylamino)propylamino)propylamin, AHEW 53 g/Eq (DMAPAPA, von Arkema).
- DMAPA:: 3-(N,N-Dimethylamino)propylamin, AHEW 51 g/Eq (DMAPA, von Huntsman).
- PM-DETA:: N,N,N',N",N"-Pentamethyldiethylentriamin, (Lupragen^{®} N 301, von BASF).
- BisDMAPA:: Bis(3-(N,N-dimethylamino)propyl)amin, AHEW 187.3 g/Eq (3,3'-Iminobis(N,N-dimethylpropylamin, von Sigma Aldrich).
- Acc. 2950:: technisches Gemisch enthaltend 2,4,6-Tris(N,N-dimethyl-4-amino-2-azabutyl)phenol, AHEW ca. 75 g/Eq (Beschleuniger 2950, von Huntsman).
- K 54:: 2,4,6-Tris(dimethylaminomethyl)phenol (Ancamine^{®} K 54, von Air Products).
- D-230:: Polyoxypropylendiamin, mittleres Molekulargewicht ca. 230 g/mol, AHEW ca. 60 g/Eq (Jeffamine^{®} D-230, von Huntsman).
- MXDA:: 1,3-Bis(aminomethyl)benzol, AHEW 34 g/Eq (von Mitsubishi Gas Chemical).
- Quarzmehl:: Korngrösse 0 bis 75 µm
- Quarzsand:: Korngrösse 0.1 bis 0.3 mm

### Herstellung von Addukten AD:

### Addukt A1:

77.5 g BHMT-(50-78%) wurden unter Stickstoffatmosphäre vorgelegt und auf 80 °C erwärmt. Unter Rühren wurden langsam 22.5 g auf 100 °C vorgeheiztes D.E.N.^{®} 438 zugegeben, wobei die Temperatur der Reaktionsmischung durch Kühlen zwischen 80 und 100 °C gehalten wurde. Die Reaktionsmischung wurde dann während 1 Stunde bei 80 bis 100 °C belassen und anschliessend auf Raumtemperatur abgekühlt. Es wurde eine dunkelgefärbte Flüssigkeit mit einer Viskosität bei 25 °C von 19.8 Pa·s und einem theoretischen AHEW von 67.1 g/Eq erhalten.

### Addukt A2:

75.0 g BHMT-(50-78%) wurden unter Stickstoffatmosphäre vorgelegt und auf 80 °C erwärmt. Unter Rühren wurden langsam 25.0 g auf 60 °C vorgeheiztes D.E.N.^{®} 431 zugegeben, wobei die Temperatur der Reaktionsmischung durch Kühlen zwischen 80 und 100 °C gehalten wurde. Die Reaktionsmischung wurde dann während 1 Stunde bei 80 bis 100 °C belassen und anschliessend auf Raumtemperatur abgekühlt. Es wurde eine dunkelgefärbte Flüssigkeit mit einer Viskosität bei 25 °C von 11.7 Pa·s und einem theoretischen AHEW von 70.4 g/Eq erhalten.

### Addukt A3:

70.0 g TETA wurden unter Stickstoffatmosphäre vorgelegt und auf 60 °C erwärmt. Unter Rühren wurden langsam 30.0 g auf 60 °C vorgeheiztes D.E.N.^{®} 431 zugegeben, wobei die Temperatur der Reaktionsmischung durch Kühlen zwischen 60 und 90 °C gehalten wurde. Die Reaktionsmischung wurde dann während 1 Stunde bei 70 bis 90 °C belassen und anschliessend auf Raumtemperatur abgekühlt. Es wurde eine klare, gelbliche Flüssigkeit mit einer Viskosität bei 25 °C von 2.7 Pa·s und einem theoretischen AHEW von 41.3 g/Eq erhalten.

### Addukt A4:

69.4 g TETA wurden unter Stickstoffatmosphäre vorgelegt und auf 80 °C erwärmt. Unter Rühren wurden langsam 30.6 g auf 100 °C vorgeheiztes D.E.N.^{®} 438 zugegeben, wobei die Temperatur der Reaktionsmischung durch Kühlen zwischen 80 und 100 °C gehalten wurde. Die Reaktionsmischung wurde dann während 1 Stunde bei 70 bis 90 °C belassen und anschliessend auf Raumtemperatur abgekühlt. Es wurde eine klare, gelbliche Flüssigkeit mit einer Viskosität bei 25 °C von 6.9 Pa·s und einem theoretischen AHEW von 41.7 g/Eq erhalten.

### Addukt A5:

75.0 g TEPA wurden unter Stickstoffatmosphäre vorgelegt und auf 80 °C erwärmt. Unter Rühren wurden langsam 25.0 g auf 100 °C vorgeheiztes D.E.N.^{®} 438 zugegeben, wobei die Temperatur der Reaktionsmischung durch Kühlen zwischen 80 und 100 °C gehalten wurde. Die Reaktionsmischung wurde dann während 1 Stunde bei 80 bis 100 °C belassen und anschliessend auf Raumtemperatur abgekühlt. Es wurde eine klare, gelbliche Flüssigkeit mit einer Viskosität bei 25 °C von 9.0 Pa·s und einem theoretischen AHEW von 42.4 g/Eq erhalten.

### Addukt A6:

79.0 g PEHA wurden unter Stickstoffatmosphäre vorgelegt und auf 80 °C erwärmt. Unter Rühren wurden langsam 21.0 g auf 100 °C vorgeheiztes D.E.N.^{®} 438 zugegeben, wobei die Temperatur der Reaktionsmischung durch Kühlen zwischen 80 und 100 °C gehalten wurde. Die Reaktionsmischung wurde dann während 1 Stunde bei 80 bis 100 °C belassen und anschliessend auf Raumtemperatur abgekühlt. Es wurde eine klare, gelbliche Flüssigkeit mit einer Viskosität bei 25 °C von 16.5 Pa·s und einem theoretischen AHEW von 45.3 g/Eq erhalten.

### Addukt A7:

80.5 g Ethylenamin E-100 wurden unter Stickstoffatmosphäre vorgelegt und auf 80 °C erwärmt. Unter Rühren wurden langsam 19.5 g auf 100 °C vorgeheiztes D.E.N.^{®} 438 zugegeben, wobei die Temperatur der Reaktionsmischung durch Kühlen zwischen 80 und 100 °C gehalten wurde. Die Reaktionsmischung wurde dann während 1 Stunde bei 80 bis 100 °C belassen und anschliessend auf Raumtemperatur abgekühlt. Es wurde eine klare, gelbliche Flüssigkeit mit einer Viskosität bei 25 °C von 22.5 Pa·s und einem theoretischen AHEW von 48.4 g/Eq erhalten.

### Addukt A8:

77.8 g TETA wurden unter Stickstoffatmosphäre vorgelegt und auf 60 °C erwärmt. Unter Rühren wurden langsam 22.2 g auf 60 °C vorgeheizter BA-DGE zugegeben, wobei die Temperatur der Reaktionsmischung durch Kühlen zwischen 60 und 90 °C gehalten wurde. Die Reaktionsmischung wurde dann während 1 Stunde bei 70 bis 90 °C belassen und anschliessend auf Raumtemperatur abgekühlt. Es wurde eine klare, gelbliche Flüssigkeit mit einer Viskosität bei 25 °C von 0.4 Pa·s und einem theoretischen AHEW von 33.7 g/Eq erhalten.

### Herstellung von Epoxidharz-Klebstoffen:

### Beispiele 1 bis 22

Für jedes Beispiel wurde eine Harz-Komponente **(Harz-Komp.)** hergestellt, indem die in den Tabellen 1 bis 3 angegebenen Inhaltsstoffe der Harz-Komponente in den angegebenen Mengen (in Gewichtsteilen) mittels eines Zentrifugalmischers (SpeedMixer™ DAC 150, FlackTek Inc.) vermischt und unter Ausschluss von Feuchtigkeit aufbewahrt wurden.

Weiterhin wurde für jedes Beispiel eine Härter-Komponente **(Härter-Komp.)** hergestellt, indem die in den Tabellen 1 bis 3 angegebenen Addukte und die weiteren Inhaltsstoffe der Härter-Komponente in den angegebenen Mengen (in Gewichtsteilen) mittels des Zentrifugalmischers vermischt und unter Ausschluss von Feuchtigkeit aufbewahrt wurden. Dabei wurden zuerst alle Inhaltsstoffe ohne das Quarzmehl und den Quarzsand vermischt, von dieser Mischung die Viskosität bestimmt, und anschliessend Quarzmehl und Quarzsand zugegeben und vermischt.

Für jedes Beispiel wurden dann die Harz-Komponente und die Härter-Komponente mittels des Zentrifugalmischers zu einer homogenen Paste verarbeitet und diese unverzüglich folgendermassen geprüft:
Die **Druckfestigkeit (2d NK; 7d NK)** wurde bestimmt, indem der gemischte Klebstoff im Normklima in einer Silikonform zu Quadern der Dimensionen 12.7 x 12.7 x 25.4 mm appliziert und diese im Normklima ausgehärtet wurden. Nach 2 und nach 7 Tagen wurden jeweils mehrere solche Quader aus der Form gelöst und nach ASTM D695 bei einer Prüfgeschwindigkeit von 1.3 mm/min bis zur Zerstörung komprimiert, wobei der Wert für die Druckfestigkeit jeweils bei der maximalen Kraft abgelesen wurde. Weitere solche Quader wurden hergestellt, indem die Komponenten vor dem Vermischen auf 5 °C gekühlt, dann germischt, zu Quadern appliziert und diese bei 5 °C und ca. 70 % relativer Luftfeuchtigkeit ausgehärtet wurden. Nach 7 Tagen wurden einige der Quader aus der Form gelöst und wie beschrieben auf Druckfestigkeit geprüft (7d 5 °C), während weitere Quader zusätzlich während 7 Tagen im Nomklima gelagert und erst dann aus der Form gelöst und wie beschrieben auf Druckfestigkeit geprüft wurden **(7d 5°C+7d NK).** Eine grosse Abweichung zwischen dem Wert nach 7d 5°C+7d NK und dem Wert nach 7d NK ist ein Zeichen für Aushärtungsstörungen in der Kälte.
Die mechanischen Eigenschaften wurden bestimmt, indem der gemischte Klebstoff im Normklima in eine Silikonform zu hantelförmigen Stäben mit einer Dicke von 10 mm, einer Länge von 150 mm, bei einer Steglänge von 80 mm und einer Stegbreite von 10 mm, appliziert und ausgehärtet wurden, diese nach 7 Tagen Aushärtungszeit aus der Form gelöst wurden und damit die **Zugfestigkeit** und die **Bruchdehnung** gemäss EN ISO 527 bei einer Zuggeschwindigkeit von 1 mm/min gemessen wurde.
Zur Messung der Zugscherfestigkeit auf Stahl **(LSS** Stahl) wurden mehrere Verklebungen hergestellt, wobei der gemischte Klebstoff zwischen zwei mit Heptan entfettete Stahlbleche in einer Schichtdicke von 0.5 mm mit einer überlappenden Klebefläche von 10 x 25 mm aufgebracht wurde. Nach einer Aufbewahrungszeit von 7 Tagen im Normklima wurde die Zugscherfestigkeit nach DIN EN 1465 mit einer Zuggeschwindigkeit von 10 mm/min bestimmt. Zur Messung der Zugscherfestigkeit auf Kohlefaser-Verbundwerkstoff (CFK) **(LSS** CFK) wurden mehrere Verklebungen hergestellt, wobei der vermischte Klebstoff zwischen zwei mit Heptan entfettete Sika^{®} CarboDur^{®} S512 Lamellen in einer Schichtdicke von 0.5 mm mit einer überlappenden Klebefläche von 10 x 50 mm aufgebracht wurde. Nach einer Aufbewahrungszeit von 7 Tagen im NK wurde die Zugscherfestigkeit wie beschrieben bestimmt.
Zur Messung der Haftzug-Festigkeit zwischen Beton und Stahl **(Haftzug)** wurden mehrere Verklebungen hergestellt, indem jeweils einige Gramm des gemischten Klebstoffs auf eine mittels Stahlbürste gereinigte Betonplatte aufgetragen und darauf ein mit Aceton gereinigter Zylinder aus Stahl mit einem Durchmesser von 20 mm über dessen Grundfläche aufgeklebt wurde, wobei die Dicke der Klebefuge 2 mm betrug. Die Verklebungen wurden im Normklima gelagert. Nach 7 Tagen wurden sie in Anlehnung an DIN EN 4624 bei einer Prüfgeschwindigkeit von 2 mm/min bis zum Bruch auseinandergezogen, um die Festigkeit der Verklebung bei der maximalen Kraft zu bestimmen.
Der **Tg**-Wert (Glasübergangstemperatur) wurde mittels DSC an ausgehärteten Klebstoff-Proben bestimmt, welche 7 Tagen im Normklima gelagert waren, mit einem Mettler Toledo DSC 3+ 700 Gerät und dem Messprogramm (1) -10 °C während 2 min, (2) -10 bis 200 °C mit einer Aufheizrate von 10 K/min (= 1st run), (3) 200 bis -10 °C mit einer Kühlrate von -50 K/min, (4) -10 °C während 2 min, (5) -10 bis 180 °C mit einer Aufheizrate von 10 K/min (= 2nd run).
Die Resultate sind in den Tabellen 1 bis 3 angegeben.
Die mit "(Ref.)" bezeichneten Beispiele sind Vergleichsbeispiele.

**Tabelle 1: Zusammensetzung und Eigenschaften der Beispiele 1 bis 8.**

| **Beispiel** | | **1** | **2** | **3** | **4** | **5** | **6** | **7** | **8** |
|---|---|---|---|---|---|---|---|---|---|
| **Harz-Komp.** | | | | | | | | | |
| | BA-DGE | 59.9 | 59.4 | 61.2 | 58.1 | 58.4 | 60.1 | 58.1 | 59.6 |
| | BuD-DGE | 11.2 | 11.2 | 11.5 | 10.9 | 10.9 | 11.3 | 10.9 | 11.2 |
| | Solvesso | 3.8 | 3.7 | 3.8 | 3.6 | 3.7 | 3.7 | 3.6 | 3.7 |
| | Quarzmehl | 130.0 | 130.0 | 130.0 | 130.0 | 130.0 | 130.0 | 130.0 | 130.0 |
| | Quarzsand | 100.0 | 100.0 | 100.0 | 100.0 | 100.0 | 100.0 | 100.0 | 100.0 |
| **Härter-Komp.** | | | | | | | | | |
| | Addukt | **A1** | **A2** | **A2** | **A2** | **A2** | **A2** | **A2** | **A2** |
| | | 17.6 | 18.0 | 16.5 | 20.6 | 18.9 | 18.7 | 20.6 | 14.7 |
| | DMAPAPA | 7.5 | 7.7 | - | - | - | - | - | 6.3 |
| | DMAPA | - | - | 4.7 | - | - | - | - | - |
| | PM-DETA | - | - | - | 4.1 | - | - | - | - |
| | BisDMAPA | - | - | - | - | 4.9 | - | - | - |
| | Acc.2950 | - | - | - | - | - | 3.7 | - | |
| | K 54 | - | - | - | - | - | - | 4.1 | - |
| | TETA | - | - | 2.4 | 2.7 | 3.2 | 2.5 | 2.7 | - |
| | D-230 | - | - | - | - | - | - | - | 4.5 |
| | Quarzmehl | 20.0 | 20.0 | 20.0 | 20.0 | 20.0 | 20.0 | 20.0 | 20.0 |
| | Quarzsand | 50.0 | 50.0 | 50.0 | 50.0 | 50.0 | 50.0 | 50.0 | 50.0 |
| **Viskosität¹** (25°C) [Pa·s] | | 0.57 | 0.68 | n.b. | n.b. | n.b. | 3.11 | 1.88 | n.b. |
| **Druckfestigkeit** | | | | | | | | | |
| [MPa] (2d NK) | | 131 | 131 | 123 | 124 | 129 | 126 | 133 | 131 |
| (7d NK) | | 138 | 137 | 132 | 132 | 138 | 131 | 133 | 132 |
| (7d 5°C) | | 115 | 109 | 105 | 103 | 114 | 86 | 84 | 89 |
| (7d 5°C+7d NK) | | 133 | 131 | 131 | 128 | 126 | 98 | 99 | 125 |
| **Zugfest.** [MPa] | | 34 | 33 | 30 | 31 | 29 | 29 | 29 | 23 |
| **Bruchdehnung** | | 0.2 % | 0.2 % | 0.2 % | 0.2 % | 0.2 % | 0.2 % | 0.2 % | 0.3% |
| **LSS** Stahl [MPa] | | 10.1 | 9.2 | 8.4 | 9.0 | 7.3 | 6.8 | 6.5 | 10.1 |
| **LSS** CFK [MPa] | | 10.6 | 14.0 | 13.1 | 15.6 | 12.4 | n.b. | n.b. | n.b. |
| **Haftzug** [MPa] | | 24.1 | 23.1 | 13.2 | 9.2 | 16.8 | n.b. | n.b. | n.b. |
| **Tg** 1st/2nd run [°C] | | 58/73 | 59/68 | 60/66 | 59/63 | 61 / 62 | 60/92 | 59/92 | n.b. |

| | | | | | | | | | |
|---|---|---|---|---|---|---|---|---|---|
| "Zugfest." steht für "Zugfestigkeit", "n.b." steht für "nicht bestimmt". ¹ Viskosität der Härter-Komponente ohne Quarzmehl und Quarzsand | | | | | | | | | |

**Tabelle 2: Zusammensetzung und Eigenschaften der Beispiele 9 bis 16.**

| **Beispiel** | | **9** | **10** | **11** | **12** | **13** | **14** | **15** | **16** |
|---|---|---|---|---|---|---|---|---|---|
| **Harz-Komp.** | | | | | | | | | |
| | BA-DGE | 64.2 | 65.0 | 64.3 | 63.9 | 63.1 | 64.2 | 63.6 | 63.0 |
| | BuD-DGE | 12.1 | 12.2 | 12.1 | 12.0 | 11.8 | 12.1 | 11.9 | 11.8 |
| | Solvesso | 4.0 | 4.0 | 4.0 | 4.0 | 4.0 | 4.0 | 4.0 | 3.9 |
| | Quarzmehl | 130.0 | 130.0 | 130.0 | 130.0 | 130.0 | 130.0 | 130.0 | 130.0 |
| | Quarzsand | 100.0 | 100.0 | 100.0 | 100.0 | 100.0 | 100.0 | 100.0 | 100.0 |
| **Härter-Komp.** | | | | | | | | | |
| | Addukt | **A3** | **A4** | **A4** | **A4** | **A4** | **A5** | **A6** | **A7** |
| | | 11.8 | 16.0 | 12.7 | 10.0 | 5.3 | 12.8 | 13.3 | 13.8 |
| | DMAPAPA | 7.9 | 2.8 | 6.9 | 10.1 | 15.8 | 6.9 | 7.2 | 7.5 |
| | Quarzmehl | 20.0 | 20.0 | 20.0 | 20.0 | 20.0 | 20.0 | 20.0 | 20.0 |
| | Quarzsand | 50.0 | 50.0 | 50.0 | 50.0 | 50.0 | 50.0 | 50.0 | 50.0 |
| **Viskosität¹** (25°C) [Pa·s] | | 0.48 | 1.99 | 0.36 | 0.15 | 0.02 | 0.39 | 0.44 | 0.57 |
| **Druckfestigkeit** | | | | | | | | | |
| [MPa] (2d NK) | | 135 | 120 | 131 | 133 | 134 | 132 | 133 | 130 |
| (7d NK) | | 137 | 123 | 134 | 145 | 142 | 133 | 134 | 130 |
| (7d 5°C) | | 110 | 84 | 101 | 107 | 116 | n.b. | n.b. | n.b. |
| (7d 5°C+7d NK) | | 122 | 109 | 118 | 119 | 125 | n.b. | n.b. | n.b. |
| **Zugfest.** [MPa] | | 29 | 29 | 24 | 35 | 30 | 36 | 33 | 31 |
| **Bruchdehnung** | | 0.2 % | 0.2 % | 0.2 % | 0.2 % | 0.2 % | 0.2 % | 0.2 % | 0.2 % |
| LSS Stahl [MPa] | | 10.8 | 7.5 | 9.3 | 8.6 | 11.2 | 8.5 | 8.0 | 7.5 |
| **LSS** CFK [MPa] | | 14.3 | n.b. | n.b. | n.b. | n.b. | n.b. | n.b. | n.b. |
| **Haftzug** [MPa] | | 24.0 | n.b. | n.b. | n.b. | n.b. | n.b. | n.b. | n.b. |
| **Tg** 1st/2nd run [°C] | | 62/78 | 60/84 | 63/79 | 57/71 | 55/59 | 62/82 | 61 /82 | 59/79 |

| | | | | | | | | | |
|---|---|---|---|---|---|---|---|---|---|
| "Zugfest." steht für "Zugfestigkeit", "n.b." steht für "nicht bestimmt". ¹ Viskosität der Härter-Komponente ohne Quarzmehl und Quarzsand | | | | | | | | | |

**Tabelle 3: Zusammensetzung und Eigenschaften der Beispiele 17 bis 21.**

| **Beispiel** | | **17** | **18** (Ref.) | **19** (Ref.) | **20** (Ref.) | **21** (Ref.) |
|---|---|---|---|---|---|---|
| **Harz-Komp.** | | | | | | |
| | BA-DGE | 65.1 | 61.3 | 66.0 | 60.2 | 61.4 |
| | BuD-DGE | 12.2 | 11.5 | 12.4 | 11.3 | 11.5 |
| | Solvesso | 4.1 | 3.8 | 4.1 | 3.8 | 3.8 |
| | Quarzmehl | 130.0 | 130.0 | 130.0 | 130.0 | 130.0 |
| | Quarzsand | 100.0 | 100.0 | 100.0 | 100.0 | 100.0 |
| **Härter-Komp.** | | | | | | |
| | Addukt | **A8** | **A2** | **A3** | **A2** | **A1** |
| | | 12.1 | 19.9 | 15.8 | 18.5 | 18.6 |
| | DMAPAPA | 5.6 | - | - | - | - |
| | TETA | - | 3.5 | 1.7 | - | - |
| | AEP | - | - | - | 6.2 | - |
| | MXDA | - | - | - | - | 4.7 |
| | Quarzmehl | 20.0 | 20.0 | 20.0 | 20.0 | 20.0 |
| | Quarzsand | 50.0 | 50.0 | 50.0 | 50.0 | 50.0 |
| **Viskosität¹** (25°C) [Pa·s] | | 0.13 | 2.44 | 2.76 | 1.51 | 1.61 |
| **Druckfestigkeit** | | | | | | |
| [MPa] (2d NK) | | 126 | 102 | 109 | 108 | 103 |
| (7d NK) | | 133 | 113 | 114 | 114 | 111 |
| (7d 5°C) | | n.b. | n.b. | n.b. | n.b. | n.b. |
| (7d 5°C+7d NK) | | n.b. | n.b. | n.b. | n.b. | n.b. |
| **Zugfest.** [MPa] | | 30 | 31 | 21 | 26 | 21 |
| **Bruchdehnung** | | 0.2 % | 0.2 % | 0.1 % | 0.2 % | 0.1 % |
| **LSS** Stahl [MPa] | | 9.5 | 4.9 | 4.0 | 8.5 | 6.1 |
| **Tg** 1st/2nd run [°C] | | 56/87 | 51/66 | 55/92 | n.b. | n.b. |

| | | | | | | |
|---|---|---|---|---|---|---|
| "Zugfest." steht für "Zugfestigkeit", "n.b." steht für "nicht bestimmt". ¹ Viskosität der Härter-Komponente ohne Quarzmehl und Quarzsand | | | | | | |

## Patentansprüche

1. Epoxidharz-Klebstoff umfassend
- eine Harz-Komponente enthaltend mindestens ein Epoxidharz,
- eine Härter-Komponente enthaltend
(a) mindestens ein Addukt **AD** erhalten aus der Umsetzung von (i) mindestens einem Polyepoxid mit (ii) mindestens einem Amin der Formel (I) und gegebenenfalls weiteren Aminen, 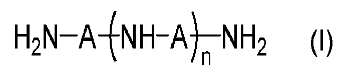 wobei
n für eine ganze Zahl von 1 bis 10 steht, und
A jeweils für einen zweiwertigen Kohlenwasserstoffrest mit 2 bis 8 C-Atomen steht, wobei alle Stickstoffatome jeweils durch eine Kette von mindestens zwei C-Atomen voneinander getrennt sind, und
(b) mindestens ein Beschleuniger **B,** welcher mindestens eine Dimethylaminogruppe aufweist,
wobei der Epoxidharz-Klebstoff insgesamt mindestens 50 Gewichts-% anorganische Füllstoffe umfasst.

2. Epoxidharz-Klebstoff gemäss Anspruch 1, **dadurch gekennzeichnet, dass** das Polyepoxid ein einkerniger oder mehrkerniger aromatischer Glycidylether mit einer mittleren Funktionalität im Bereich von 2 bis 4 ist.

3. Epoxidharz-Klebstoff gemäss Anspruch 2, **dadurch gekennzeichnet, dass** das Polyepoxid ein Novolak-Glycidylether mit einer mittleren Funktionalität im Bereich von 2.5 bis 3.9 ist.

4. Epoxidharz-Klebstoff gemäss einem der Ansprüche 1 bis 3, **dadurch gekennzeichnet, dass** das Amin der Formel (I) ausgewählt ist aus der Gruppe bestehend aus Triethylentetramin, Tetraethylenpentamin, Pentaethylenhexamin, Hexaethylenheptamin, N,N'-Bis(3-aminopropyl)ethylendiamin und Bis(6-aminohexyl)amin.

5. Epoxidharz-Klebstoff gemäss einem der Ansprüche 1 bis 4, **dadurch gekennzeichnet, dass** die primären Aminogruppen des Amins der Formel (I) und gegebenenfalls vorhandenen weiteren Aminen gegenüber den Epoxidgruppen des Polyepoxids bei der Umsetzung zum Addukt im stöchiometirschen Überschuss vorliegen.

6. Epoxidharz-Klebstoff gemäss einem der Ansprüche 1 bis 5, **dadurch gekennzeichnet, dass** die Härter-Komponente einen Gehalt an Addukt **AD** im Bereich von 20 bis 80 Gewichts-% bezogen auf die in der Härter-Komponente enthaltenen, mit Epoxidgruppen reaktiven Verbindungen aufweist.

7. Epoxidharz-Klebstoff gemäss einem der Ansprüche 1 bis 6, **dadurch gekennzeichnet, dass** der Beschleuniger **B** die Formel (II) aufweist, 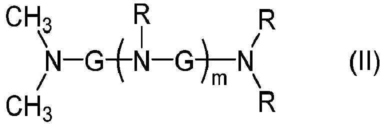 wobei
m für 0 oder 1 oder 2 oder 3 oder 4 steht,
G jeweils für einen zweiwertigen Kohlenwasserstoffrest mit 2 bis 8 C-Atomen steht, wobei alle Stickstoffatome jeweils durch eine Kette von mindestens zwei C-Atomen voneinander getrennt sind, und
R jeweils für einen Wasserstoff-Rest oder für einen Methyl-Rest steht.

8. Epoxidharz-Klebstoff gemäss einem der Ansprüche 1 bis 7, **dadurch gekennzeichnet, dass** der Beschleuniger **B** 3-(3-(Dimethylamino)propylamino)propylamin ist.

9. Epoxidharz-Klebstoff gemäss Anspruch 8, **dadurch gekennzeichnet, dass** die Härter-Komponente einen Gehalt an 3-(3-(Dimethylamino)propylamino)propylamin im Bereich von 10 bis 70 Gewichts-%, bevorzugt 15 bis 60 Gewichts-%, bezogen auf die in der Härter-Komponente enthaltenen, mit Epoxidgruppen reaktiven Verbindungen aufweist.

10. Epoxidharz-Klebstoff gemäss einem der Ansprüche 1 bis 9, **dadurch gekennzeichnet, dass** als anorganischer Füllstoff Quarzmehl und/oder Quarzsand enthalten ist.

11. Epoxidharz-Klebstoff gemäss Anspruch 10, **dadurch gekennzeichnet, dass** er 50 bis 90 Gewichts-% Quarzmehl und/oder Quarzsand umfasst.

12. Verfahren zum Herstellen der Härter-Komponente des Epoxidharz-Klebstoffs gemäss einem der Ansprüche 1 bis 11 umfassend die Schritte
- Herstellen des Addukts AD durch Umsetzen von mindestens einem Polyepoxid mit mindestens einem Amin der Formel (I) und gegebenenfalls weiteren Aminen, wobei die primären Aminogruppen gegenüber den Epoxidgruppen im stöchiometrischen Überschuss vorliegen, bei einer Temperatur im Bereich von 40 bis 140 °C, bis alle Epoxidgruppen umgesetzt sind,
- Mischen des erhaltenen Addukts **AD** mit mindestens einem Beschleuniger **B,** welcher mindestens eine Dimethylaminogruppe aufweist,
- gegebenenfalls Hinzufügen von mindestens einem anorganischen Füllstoff und gegebenenfalls weiteren Substanzen.

13. Ausgehärteter Klebstoff erhalten aus dem Epoxidharz-Klebstoff gemäss einem der Ansprüche 1 bis 11 nach dem Mischen der Komponenten und deren Aushärtung.

14. Verwendung des Epoxidharz-Klebstoffs gemäss einem der Ansprüche 1 bis 11 in einem Verfahren zum Verkleben umfassend die Schritte
- Mischen der Komponenten mit einer geeigneten Methode und entweder
- Applizieren des gemischten Klebstoffs auf mindestens eines der zu verklebenden Substrate,
- Fügen der Substrate zu einer Verklebung innerhalb der Offenzeit des Klebstoffs,
oder
- Applizieren des gemischten Klebstoffs in einen Hohlraum oder Spalt zwischen zwei Substraten,
- gegebenenfalls Einfügen eines Ankers in den Hohlraum oder Spalt innerhalb der Offenzeit des Klebstoffs,
gefolgt von der Aushärtung des Klebstoffs.

15. Verwendung gemäss Anspruch 14 zur Herstellung einer Klebeverbindung mit einer Druckfestigkeit von mindestens 120 MPa, bevorzugt mindestens 125 MPa, bestimmt nach ASTM D695 an während 7 Tagen bei Raumtemperatur ausgehärteten Prüfkörpern bei einer Prüfgeschwindigkeit von 1.3 mm/min, wie in den Beispielen beschrieben.
